# EUROPEAN PATENT SPECIFICATION

(11) **EP 4 243 213 B1**
(45) Date of publication and mention of the grant of the patent: **16.09.2026**
(21) Application number: 23161014.8
(22) Date of filing: 09.03.2023
(51) Int. Cl.: H01R 4/34, H01R 13/641, H01R 13/70, H01R 13/707, H01R 13/52, H01R 103/00

(54) **CONNECTOR AND CONNECTOR ASSEMBLY**
VERBINDER UND VERBINDERANORDNUNG
CONNECTEUR ET ENSEMBLE CONNECTEUR

(30) Priority: 09.03.2022 CN 202210224214; 09.03.2022 CN 202220498838 U
(43) Date of publication of application: 13.09.2023
(73) Proprietor: Tyco Electronics (Shanghai) Co., Ltd., Pilot Free Trade Zone Shanghai 200131 (CN)
(72) Inventor: Yang, Yuchen, Shanghai, 200233 (CN); Zhou, Xiao, Shanghai, 200233 (CN); Jiang, Kaixuan, Shanghai, 200233 (CN); Li, Ziwei, Shanghai, 200233 (CN)
(74) Representative: Grünecker Patent- und Rechtsanwälte PartG mbB

(56) References cited:
- WO-A1-2018/021023
- CN-A- 113 078 513
- US-A1- 2013 078 835

## Description

### BACKGROUND OF THE INVENTION

### Field of the Invention

The present invention relates to a connector and a connector assembly including the connector.

### Description of the Related Art

In the prior art, the connector at the cable end usually includes a housing, a terminal, a connection assembly and a cable. The terminal is arranged in the housing, and the cable extends into the housing and is electrically connected with the terminal. The connection assembly is installed in the housing, which is used to fasten the terminal to a mating terminal of a mating connector, so that the terminal is electrically connected with the mating terminal.

In the prior art, when the connector is mated with the mating connector, there is a lack of safety protection device to judge whether the connection assembly has been fastened and prevent the fastened connection assembly from being accidentally loosened, which reduces the use safety of the connector.

In addition, in the prior art, in order to detect the connection state between the terminal of the connector and the mating terminal of the mating connector, it is also necessary to set a high-voltage interlock (or called a detection connector) and a mating high-voltage interlock (or called a mating detection connector) on the connector and the mating connector respectively. However, the existing high-voltage interlock is fixed on the housing of the connector, so there is a risk that the high-voltage interlock will be mated with the mating high-voltage interlock before the terminal of the connector is electrically connected with the mating terminal of the mating connector, which also reduces the use safety of the connector.

CN113078513A and US2013078835A1 disclose connector safety mechanisms with a cover or CPA member linked to an interlock function.

### SUMMARY OF THE INVENTION

The invention is set out in the appended set of claims. The present invention has been made to overcome or alleviate at least one aspect of the above mentioned disadvantages.

According to an aspect of the present invention, there is provided a connector. The connector comprises of: a housing which is formed with a slot and a mounting port; a connection assembly which is installed in the mounting port of the housing and is adapted to fasten a terminal of the connector to a mating terminal of a mating connector; a safety cover which is movably mounted on the housing and is capable of being moved between an initial position where the connection assembly is not covered by the safety cover and a safety position where the connection assembly is covered by the safety cover; and a high-voltage interlock which is movably installed in the slot and is capable of being moved between a connected position where the high-voltage interlock is engaged with a mating high-voltage interlock of the mating connector and a disconnected position where the high-voltage interlock is separated from the mating high-voltage interlock. In the process of mating the connector with the mating connector, when the connection assembly is not fastened, the connection assembly is in a position that interferes with the safety cover to prevent the safety cover from being moved from the initial position to the safety position. The safety cover is slidably connected with the high-voltage interlock, so that the safety cover and the high-voltage interlock are linked according to the following relationship: when the safety cover is moved to the initial position, the high-voltage interlock is moved to the disconnected position; and when the safety cover is moved to the safety position, the high-voltage interlock is moved to the connected position.

According to an exemplary embodiment of the present invention, the high-voltage interlock comprises of: an insulator; and two detection terminals which are fixed to the insulator and are used to electrically connect to positive and negative electrodes of a high-voltage interlock circuit respectively. When the high-voltage interlock is moved to the connected position, the two detection terminals of the high-voltage interlock are electrically connected with a mating detection terminal of the mating high-voltage interlock to turn on the high-voltage interlock circuit; when the high-voltage interlock is moved to the disconnected position, the two detection terminals are separated from the mating detection terminal to cut off the high-voltage interlock circuit.

According to the present invention, the safety cover is configured to be moved between the initial position and the safety position in a first direction; the high-voltage interlock is configured to be moved between the connected position and the disconnected position in a second direction perpendicular to the first direction.

According to another exemplary embodiment of the present invention, a guide slot extending in the first direction is formed on one of the inner wall surface of the safety cover and the outer wall surface of the housing, and a guide rib extending in the first direction is formed on the other; the guide slot is slidably mated with the guide rib to guide the safety cover to move between the initial position and the safety position in the first direction relative to the housing.

According to another exemplary embodiment of the present invention, the slot on the housing extends in the second direction, and the insulator of the high-voltage interlock comprises a first part extending in the second direction; the first part of the insulator is slidably mated with the slot of the housing to guide the high-voltage interlock to move between the connected position and the disconnected position in the second direction relative to the housing.

According to another exemplary embodiment of the present invention, the insulator of the high-voltage interlock further comprises a second part which is connected with the first part and is located outside the housing; the detection terminal is fixed to the first part of the insulator, and the second part of the insulator is slidably connected with the safety cover.

According to another exemplary embodiment of the present invention, a pair of support walls are formed on the inner wall surface of the safety cover, and a part of the second part of the insulator is arranged in a gap between the pair of support walls; a chute is formed on each side of the second part of the insulator facing the support wall, and a convex part is formed on the support wall and is slidably connected with the chute; the chute comprises a main part extending a predetermined length in a direction inclined to the first direction to convert the movement of the safety cover in the first direction into the movement of the high-voltage interlock in the second direction.

According to another exemplary embodiment of the present invention, the chute also includes a first end part and a second end part which are respectively connected with the two ends of the main part of the chute, and the first end part and the second end part extend along the first direction; when the safety cover is moved to the initial position, the convex part is moved into the first end part of the chute; when the safety cover is moved to the safety position, the convex part is moved into the second end part of the chute.

According to another exemplary embodiment of the present invention, the high-voltage interlock also includes a sealing ring, which is sleeved on the first part of the insulator and used to seal a gap between the first part of the insulator and the slot of the housing.

According to another exemplary embodiment of the present invention, the connection assembly has a first operation part exposed from the housing, so that the connection assembly is capable of being fastened or loosened by operating the first operation part; in the process of mating the connector with the mating connector, when the connection assembly is not fastened, the first operation part is in a position that interferes with the safety cover to prevent the safety cover from being moved from the initial position to the safe position; when the safety cover is in the initial position, the first operation part is not covered by the safety cover to allow the connection assembly to be fastened or loosened by operating the first operation part; when the safety cover is in the safety position, the first operation part is covered by the safety cover to prevent the connection assembly from being loosened by operating the first operation part.

According to another exemplary embodiment of the present invention, in the process of mating the connector with the mating connector, when the connection assembly has been fastened, the first operation part is in a position that does not interfere with the safety cover, to allow the safety cover to be moved from the initial position to the safe position.

According to another exemplary embodiment of the present invention, the connector further comprises a mechanical connection member which is installed on the housing and is suitable for threaded connection with a mating housing of the mating connector to fasten the housing to the mating housing. The mechanical connection member has a second operation part exposed from the housing, so that the mechanical connection member is capable of being fastened or loosened by operating the second operation part; in the process of mating the connector with the mating connector, when the mechanical connection member is not fastened, the second operation part is in a position of interference with the safety cover to prevent the safety cover from being moved from the initial position to the safe position; when the safety cover is in the initial position, the second operation part is not covered by the safety cover to allow the mechanical connection member to be fastened or loosened by operating the second operation part; when the safety cover is in the safety position, the second operation part is covered by the safety cover to prevent the mechanical connection member from being loosened by operating the second operation part.

According to another exemplary embodiment of the present invention, in the process of mating the connector with the mating connector, when the connection assembly and the mechanical connection member are fastened, the first operation part and the second operation part are in a position that does not interfere with the safety cover, to allow the safety cover to be moved from the initial position to the safe position.

According to another exemplary embodiment of the present invention, the safety cover comprises of: a top wall which is formed with an operation hole; and a pair of side walls which are respectively connected to both sides of the top wall. When the safety cover is in the initial position, the first operation part is located outside the safety cover, and the second operation part is exposed from the safety cover through the operation hole.

According to another exemplary embodiment of the present invention, a limit part is formed on the inner wall surface of the top wall of the safety cover; when the safety cover is moved from the initial position to the safe position, the limit part rests against the first operation part to limit the safety cover at the safe position.

According to another exemplary embodiment of the present invention, the connector further comprises a terminal which is arranged in the housing for electrical connection with the mating terminal of the mating connector.

According to another exemplary embodiment of the present invention, the connector further comprises of: a cable, one end of which is inserted into the housing in the first direction and electrically connected with the terminal; and an end cover which is sleeved on one end of the housing and is used to fix the cable to the housing.

According to another exemplary embodiment of the present invention, a cable port allowing the cable to be inserted in the first direction is formed at one end of the housing; the mounting port is formed on the top of the other end of the housing to allow the connection assembly to be inserted in the second direction perpendicular to the first direction; a mating port is formed on the bottom of the other end of the housing to allow the connector to mate with the mating connector in the second direction.

According to another exemplary embodiment of the present invention, an elastic cantilever is formed on the safety cover, and a limit protrusion is formed on the housing; when the housing is not mated with the mating housing and the safety cover is in the initial position, the elastic cantilever is in a position of interference with the limit protrusion to prevent the safety cover from being moved from the initial position to the safety position.

According to another exemplary embodiment of the present invention, when the housing has been mated with the mating housing and the safety cover is in the initial position, the elastic cantilever is pushed by an unlocking part of the mating housing to a position that does not interfere with the limit protrusion, so that the movement of the safety cover will not be hindered by the limit protrusion.

According to another aspect of the present invention, there is provided a connector assembly. The connector assembly comprises of: the above connector; and a mating connector adapted to mate with the connector. The mating connector comprises of: a mating housing which is suitable for mating with the housing of the connector; a mating terminal which is arranged in the mating housing for electrical connection with the terminal of the connector; and a mating high-voltage interlock which is arranged in the mating housing for mating with the high-voltage interlock of the connector.

In the above-mentioned exemplary embodiments according to the present invention, the high-voltage interlock is linked with the safety cover, so it can be ensured that the high-voltage interlock is always in a state of separation from the mating high-voltage interlock before the terminal of the connector is electrically connected to the mating terminal of the mating connector, thus improving the use safety of the connector.

In addition, in the aforementioned exemplary embodiments according to the present invention, the safety cover can not only reliably prevent the fastened connection assembly from being accidentally loosened, but also can conveniently judge whether the connection assembly have been fastened, thus improving the use safety of the connector.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative exploded view of a connector assembly according to an exemplary embodiment of the present invention, in which the safety cover of the connector is not shown;
Figure 2 shows an illustrative exploded view of the connector assembly according to an exemplary embodiment of the present invention, in which the safety cover and housing of the connector are not shown;
Figure 3 shows an illustrative assembly view of the connector assembly according to an exemplary embodiment of the present invention, wherein the safety cover and housing of the connector are not shown;
Figure 4 shows an illustrative view of a connector assembly according to an exemplary embodiment of the present invention, wherein the connection assembly and the mechanical connection member are in the loosened position, and the safety cover is in the initial position;
Figure 5 shows an illustrative view of the connector assembly according to an exemplary embodiment of the present invention, wherein the connection assembly and the mechanical connection member are in the fastened position, and the safety cover is in the initial position;
Figure 6 shows an illustrative view of the connector assembly according to an exemplary embodiment of the present invention, wherein the connection assembly and the mechanical connection member are in the fastened position, and the safety cover is moved to the safe position;
Figure 7 shows an illustrative view of a connector housing according to an exemplary embodiment of the present invention;
Figure 8 shows an illustrative perspective view of the safety cover of the connector according to an exemplary embodiment of the present invention when viewed from the top;
Figure 9 shows an illustrative perspective view of the safety cover of the connector according to an exemplary embodiment of the present invention when viewed from the bottom;
Figure 10 shows a transverse sectional view of a connector housing and a safety cover according to an exemplary embodiment of the present invention;
Figure 11 shows an illustrative view of a connector according to an exemplary embodiment of the present invention, wherein the connection assembly and mechanical connection member are in the fastened position, and the safety cover is in the initial position;
Figure 12 shows an illustrative perspective view of a mating connector according to an exemplary embodiment of the present invention;
Figure 13 shows an illustrative assembly view of the connector housing and the high-voltage interlock according to an exemplary embodiment of the present invention;
Figure 14 shows an illustrative perspective view of a connector housing according to an exemplary embodiment of the present invention;
Figure 15 shows an illustrative perspective view of a high-voltage interlock of a connector according to an exemplary embodiment of the present invention;
Figure 16 shows an illustrative view of a high-voltage interlock and safety cover of a connector and a mating high-voltage interlock of a mating connector according to an exemplary embodiment of the present invention, wherein the safety cover is in the initial position and the high-voltage interlock is in the disconnected position;
Figure 17 shows an illustrative assembly view of the high-voltage interlock and the safety cover of the connector according to an exemplary embodiment of the present invention, wherein the safety cover is in the initial position;
Figure 18 shows an illustrative view of the safety cover of the connector according to an exemplary embodiment of the present invention when viewed from the bottom, in which the structure connected with the high-voltage interlock is shown;
Figure 19 shows the sectional view of the high-voltage interlock and safety cover of the connector and the mating high-voltage interlock of the mating connector according to an exemplary embodiment of the present invention, wherein the safety cover is in the safe position and the high-voltage interlock is in the connected position;
Figure 20 shows an illustrative view of the high-voltage interlock and safety cover of the connector and the mating high-voltage interlock of the mating connector according to an exemplary embodiment of the present invention, wherein the safety cover is in the safe position and the high-voltage interlock is in the connected position; and
Figure 21 shows the sectional view of the high-voltage interlock and safety cover of the connector and the mating high-voltage interlock of the mating connector according to an exemplary embodiment of the present invention, wherein the safety cover is in the safe position and the high-voltage interlock is in the connected position.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements.

In the following detailed description, for purposes of explanation, numerous specific details are set forth in order to provide a thorough understanding of the disclosed embodiments. In other instances, well-known structures and devices are schematically shown in order to simplify the drawing.

According to a general concept of the present invention, there is provided a connector. The connector comprises of: a housing which is formed with a slot and a mounting port; a connection assembly which is installed in the mounting port of the housing and is adapted to fasten a terminal of the connector to a mating terminal of a mating connector; a safety cover which is movably mounted on the housing and is capable of being moved between an initial position where the connection assembly is not covered by the safety cover and a safety position where the connection assembly is covered by the safety cover; and a high-voltage interlock which is movably installed in the slot and is capable of being moved between a connected position where the high-voltage interlock is engaged with a mating high-voltage interlock of the mating connector and a disconnected position where the high-voltage interlock is separated from the mating high-voltage interlock. In the process of mating the connector with the mating connector, when the connection assembly is not fastened, the connection assembly is in a position that interferes with the safety cover to prevent the safety cover from being moved from the initial position to the safety position. The safety cover is slidably connected with the high-voltage interlock, so that the safety cover and the high-voltage interlock are linked according to the following relationship: when the safety cover is moved to the initial position, the high-voltage interlock is moved to the disconnected position; and when the safety cover is moved to the safety position, the high-voltage interlock is moved to the connected position.

According to another general concept of the present invention, there is provided a connector assembly. The connector assembly comprises of: the above connector; and a mating connector adapted to mate with the connector. The mating connector comprises of: a mating housing which is suitable for mating with the housing of the connector; a mating terminal which is arranged in the mating housing for electrical connection with the terminal of the connector; and a mating high-voltage interlock which is arranged in the mating housing for mating with the high-voltage interlock of the connector.

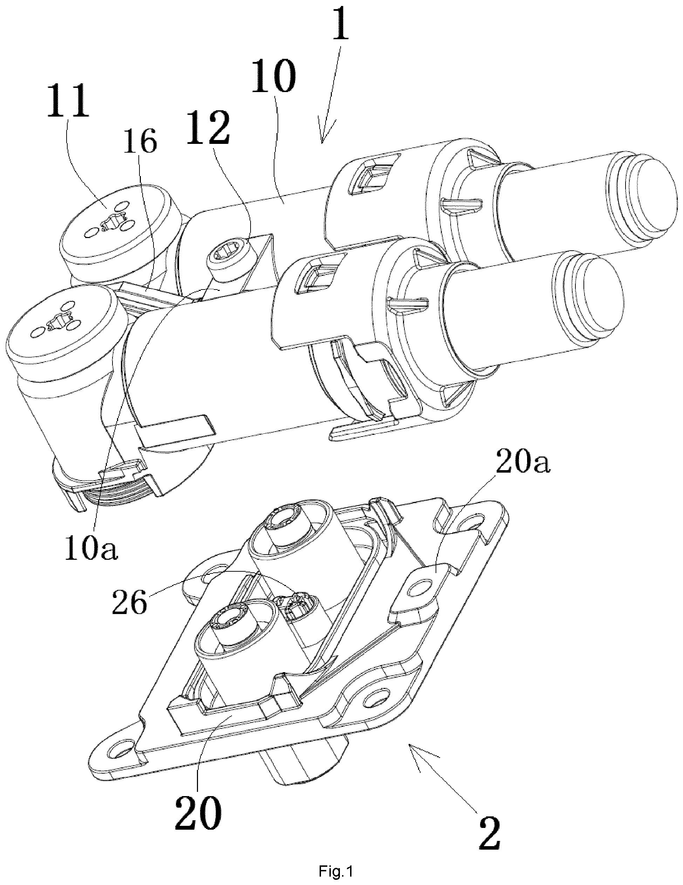

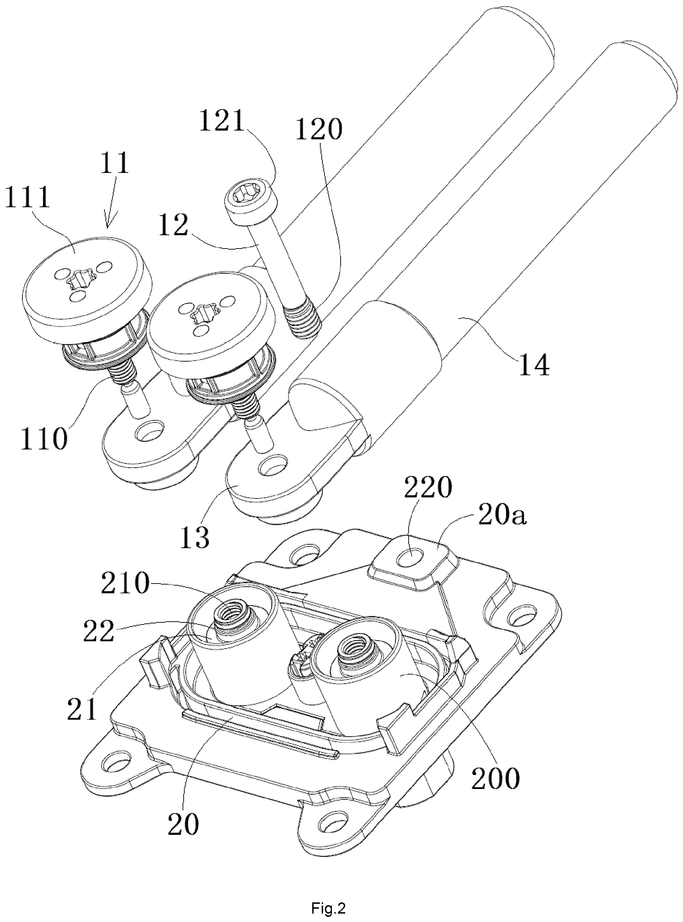

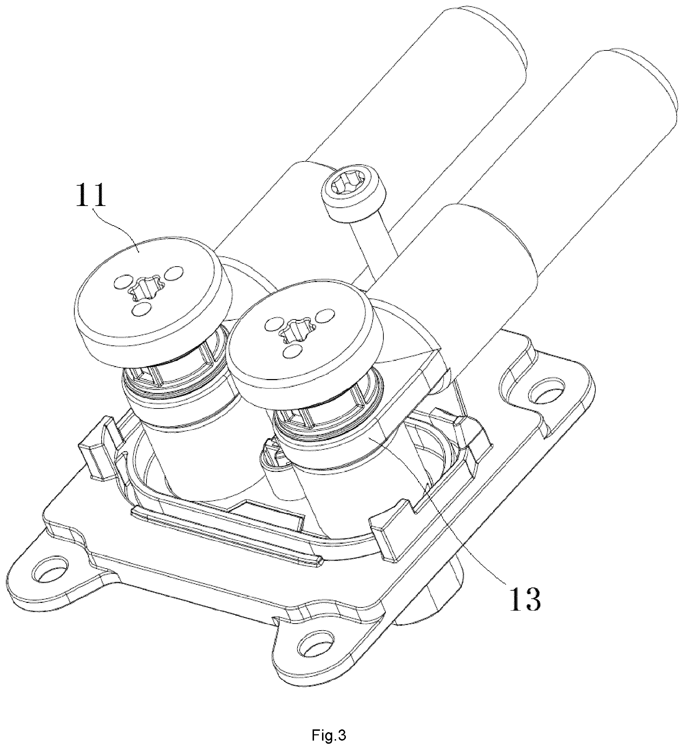

Figure 1 shows an illustrative exploded view of the connector assembly according to an exemplary embodiment of the present invention, wherein the safety cover 100 of connector 1 is not shown; Figure 2 shows an illustrative exploded view of the connector assembly according to an exemplary embodiment of the present invention, wherein the safety cover 100 and the housing 10 of the connector 1 are not shown; Figure 3 shows an illustrative assembly view of the connector assembly according to an exemplary embodiment of the present invention, in which the safety cover 100 and the housing 10 of the connector 1 are not shown.

As shown in Figures 1 to 3, in the illustrated embodiment, the connector assembly mainly includes a connector 1 and a mating connector 2. The connector 1 includes a housing 10, a terminal 13 and a connection assembly 11. The mating connector 2 includes a mating housing 20 mated with the housing 10 and a mating terminal 21 electrically connected with the terminal 13.

As shown in Figures 1 to 3, in the illustrated embodiment, terminal 13 is arranged in housing 10. The housing 10 has a mounting port 1011. The connection assembly 11 is installed in the mounting port 1011 of the housing 10, and is suitable for fastening the terminal 13 to the mating terminal 21 of the mating connector 2. The connection assembly 11 has a first operation part 111 exposed from the housing 10, which enables the connection assembly 11 to be fastened or loosened by the first operation part 111.

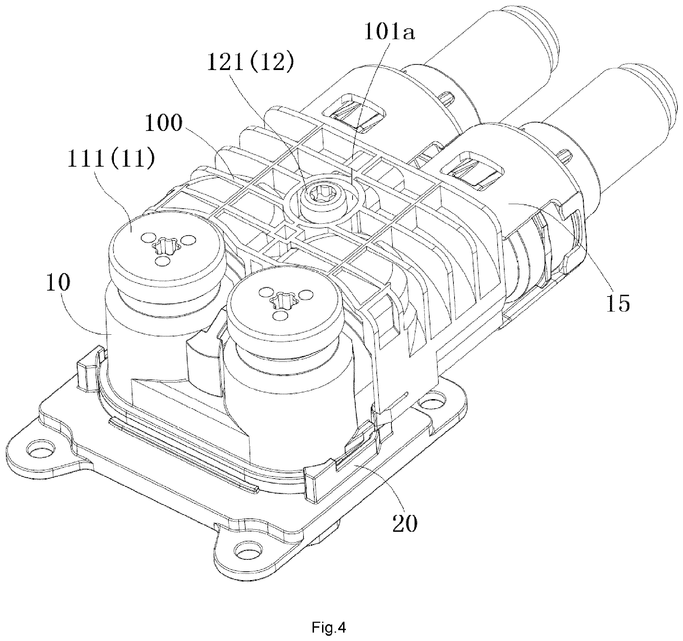

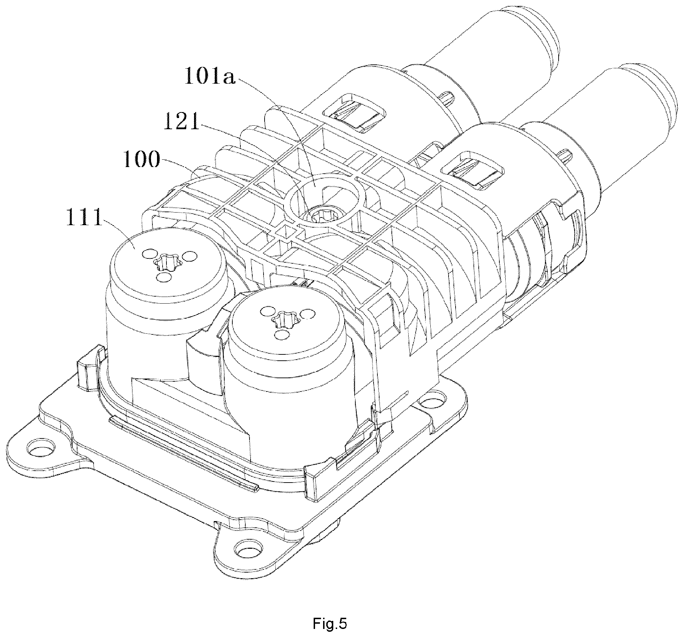

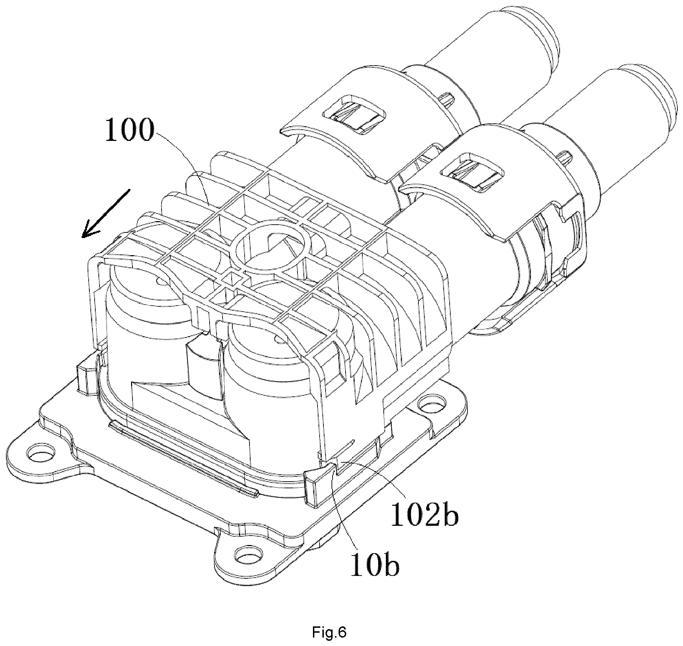

Figure 4 shows an illustrative view of a connector assembly according to an exemplary embodiment of the present invention, wherein the connection assembly 11 and the mechanical connection member 12 are in the loosened position, and the safety cover 100 is in the initial position; Figure 5 shows an illustrative view of the connector assembly according to an exemplary embodiment of the present invention, wherein the connection assembly 11 and the mechanical connection member 12 are in the fastened position, and the safety cover 100 is in the initial position; Figure 6 shows an illustrative view of the connector assembly according to an exemplary embodiment of the present invention, wherein the connection assembly 11 and the mechanical connection member 12 are in the fastened position, and the safety cover 100 is moved to the safe position.

As shown in Figures 1 to 6, in the illustrated embodiment, the connector 1 also includes a safety cover 100, which is slidably mounted on the housing 10.

As shown in Figure 4, in the illustrated embodiment, when the connector 1 is mated with the mating connector 2, and when the connection assembly 11 is not fastened, the first operation part 111 is in the position of interference with the safety cover 100 (for example, as shown in Figure 4, the top surface of the first operation part 111 is higher than the inner surface of the safety cover 100), to prevent the safety cover 100 from being moved from the initial position to the safe position.

As shown in Figures 4 and 5, in the illustrated embodiment, when the safety cover 100 is in the initial position, the first operation part 111 is not covered by the safety cover 100 to allow the connection assembly 11 to be fastened or loosened by operating the first operation part 111.

Please note that, as shown in Figures 4 and 5, in an exemplary embodiment of the present invention, when the safety cover 100 is in the initial position, the connection assembly 11 can be fastened (as shown in Figure 5) or not be fastened (as shown in Figure 4).

As shown in Figure 6, in the illustrated embodiment, when the safety cover 100 is in the safe position, the first operation part 111 is covered by the safety cover 100 to prevent the fastened connection assembly 11 from being loosened by operating the first operation part 111.

As shown in Figures 1 to 6, in the illustrated embodiment, the connector 1 also includes a mechanical connection member 12, which is installed on the housing 10 and is suitable for threaded connection with the mating housing 20 of the mating connector 2 to fasten the housing 10 onto the mating housing 20.

As shown in Figures 1 to 6, in the illustrated embodiment, the mechanical connection member 12 has a second operation part 121 exposed from the housing 10, so that the mechanical connection member 12 is capable of being fastened or loosened by operating the second operation part 121.

As shown in Figure 4, in the illustrated embodiment, when the connector 1 is mated with the mating connector 2, and when the mechanical connection member 12 is not fastened, the second operation part 121 is in the position of interference with the safety cover 100 (for example, as shown in Figure 4, the top surface of the second operation part 121 is higher than the inner surface of the safety cover 100) to prevent the safety cover 100 from being moved from the initial position to the safe position.

As shown in Fig. 4 and Fig. 5, in the illustrated embodiment, when the safety cover 100 is in the initial position, the second operation part 121 is not covered by the safety cover 100 to allow the mechanical connection member 12 to be fastened or loosened by operating the second operation part 121.

Please note that, as shown in Figures 4 and 5, in an exemplary embodiment of the present invention, when the safety cover 100 is in the initial position, the mechanical connection member 12 can be fastened (as shown in Figure 5) or not be fastened (as shown in Figure 4).

As shown in Figure 6, in the illustrated embodiment, when the safety cover 100 is in the safe position, the second operation part 121 is covered by the safety cover 100 to prevent the mechanical connection member 12 from being loosened by operating the second operation part 121.

As shown in Figure 4, in the illustrated embodiment, when the connector 1 is mated with the mating connector 2, and when either of the connection assembly 11 and the mechanical connection member 12 is not fastened, one of the first operation part 111 and the second operation part 121 will be in the position of interference with the safety cover 100, so that the safety cover 100 cannot be moved from the initial position to the safe position.

As shown in Figure 5 and Figure 6, in the illustrated embodiment, when the connector 1 is mated with the mating connector 2, and when the connection assembly 11 and the mechanical connection member 12 are fastened, the first operation part 111 and the second operation part 121 are in a position that does not interfere with the safety cover 100. At this time, the safety cover 100 can be moved from the initial position to the safe position.

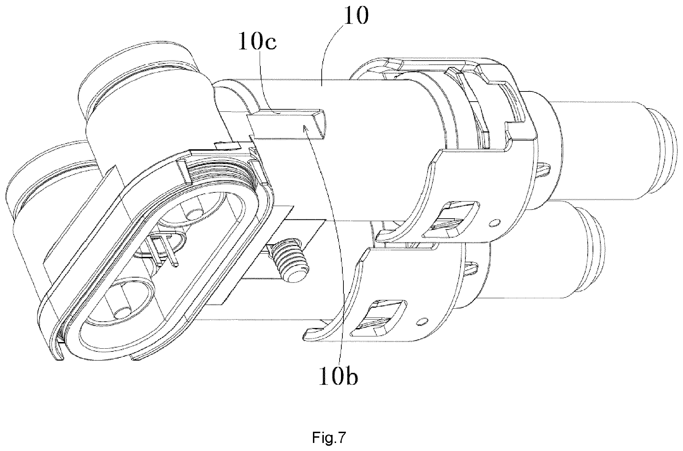

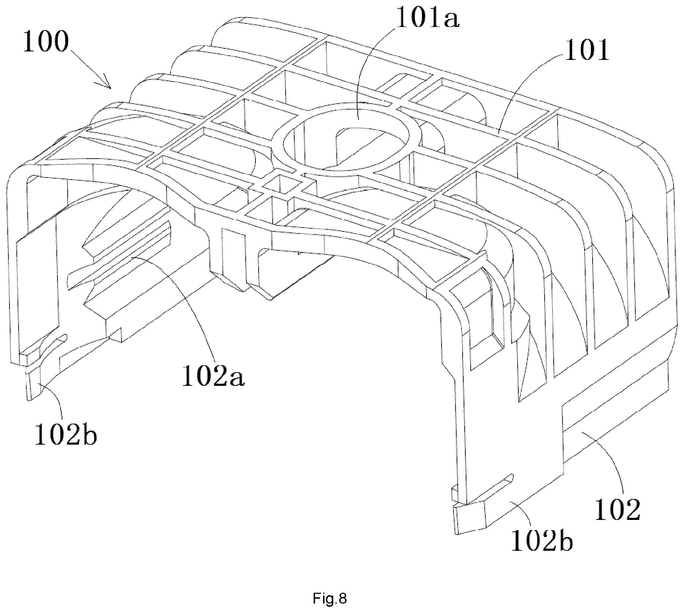

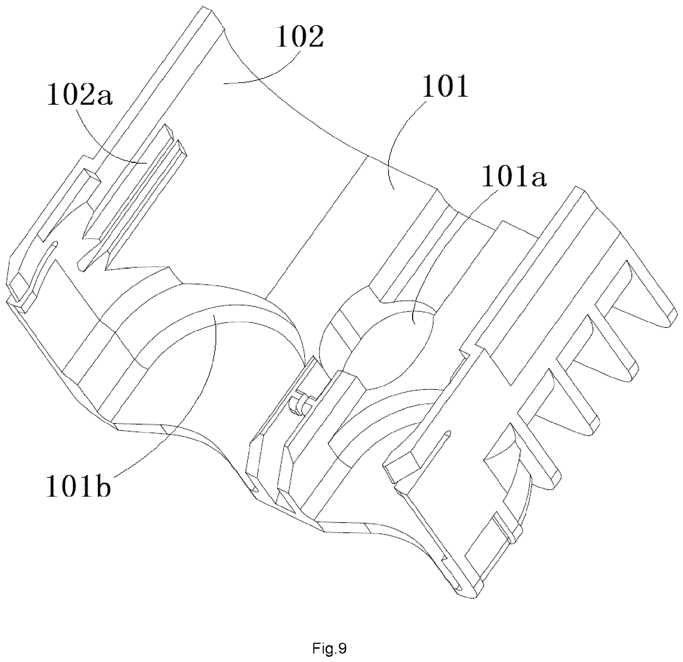

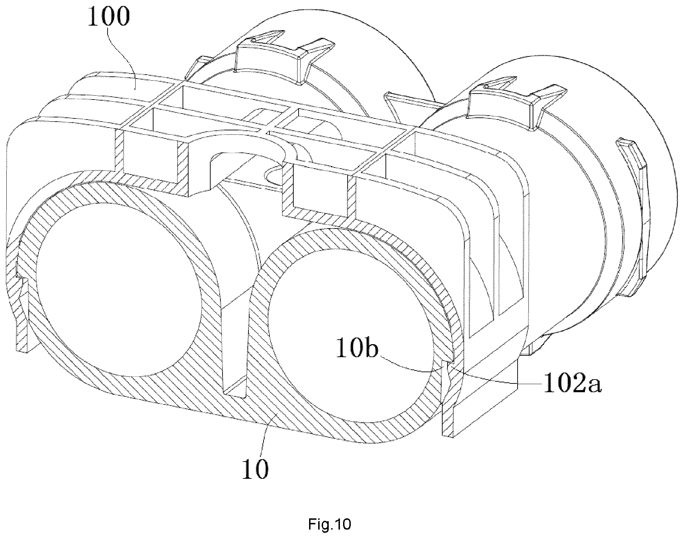

Figure 7 shows an illustrative view of the housing 10 of the connector 1 according to an exemplary embodiment of the present invention; Figure 8 shows an illustrative perspective view of the safety cover 100 of connector 1 according to an exemplary embodiment of the present invention when viewed from the top; Figure 9 shows an illustrative perspective view of the safety cover 100 of connector 1 according to an exemplary embodiment of the present invention when viewed from the bottom; Figure 10 shows a transverse sectional view of the housing 10 and the safety cover 100 of the connector 1 according to an exemplary embodiment of the present invention.

As shown in Figures 1 to 10, in the illustrated embodiment, the safety cover 100 comprises a top wall 101 and a pair of side walls 102. An operation hole 101a is formed on the top wall 101. A pair of side walls 102 are respectively connected to the top wall 101. When the safety cover 100 is in the initial position, the first operation part 111 is located outside the safety cover 100, and the second operation part 121 is exposed from the safety cover 100 through the operation hole 101a.

As shown in Figures 1 to 10, in the illustrated embodiment, a guide slot 10b extending in a first direction is formed on one of the outer wall surface of the housing 10 and the inner wall surface of the side wall 102 of the safety cover 100, and a guide rib 102a extending in the first direction is formed on the other. The guide rib 102a is buckled into the guide slot 10b and can be moved along the guide slot 10b in the first direction to guide the safety cover 100 to move between the initial position and the safety position relative to the housing 10.

As shown in Figures 1 to 10, in the illustrated embodiment, the guide slot 10b is formed on the outer wall surface of the housing 10, and the guide rib 102a is formed on the inner wall surface of the side wall 102 of the safety cover 100. The guide slot 10b has a guide surface 10c extending in the first direction, and the guide rib 102a slides in contact with the guide surface 10c to guide the guide rib 102a to move in the first direction.

As shown in Figures 1 to 10, in the illustrated embodiment, a limit part 101b is formed on the inner wall surface of the top wall 101 of the safety cover 100. When the safety cover 100 is moved from the initial position to the safe position, the limit part 101b rests against the first operation part 111 to limit the safety cover 100 at the safe position.

As shown in Figures 1 to 10, in the illustrated embodiment, connector 1 also includes a cable 14 and an end cover 15. One end of the cable 14 is inserted into the housing 10 in the first direction and electrically connected with the terminal 13. The end cover 15 is sleeved on one end of the housing 10 to fix the cable 14 to the housing 10.

As shown in Figures 1 to 10, in the illustrated embodiment, a cable port 1014 allowing the cable 14 to be inserted in the first direction is formed on one end of the housing 10. The mounting port 1011 is formed on the top of the other end of the housing 10 to allow the connection assembly 11 to be inserted in the second direction perpendicular to the first direction. A mating port is formed at the bottom of the other end of the housing 10 to allow the connector 1 to mate with the mating connector 2 in the second direction.

As shown in Figures 1 to 10, in the illustrated embodiment, each of the safety cover 100 and the end cover 15 has a front end and a rear end which are opposite to each other in the first direction. When the safety cover 100 is moved from the safe position to the initial position, the front end face of the end cover 15 rests against the rear end face of the safety cover 100 to limit the safety cover 100 at the initial position.

As shown in Figures 1 to 10, in the illustrated embodiment, the housing 10 includes at least two housing units and a connection part 10a. The connection part 10a is connected between two adjacent housing units of the housing 10. A mounting hole is formed on the connection part 10a, and the mechanical connection member 12 is installed in the mounting hole of the connection part 10a.

As shown in Figures 1 to 10, in the illustrated embodiment, connector 1 includes at least two terminals 13, at least two connection assemblies 11, at least two cables 14 and at least two end covers 15. At least two terminals 13 are respectively arranged in at least two housing units for electrical connection with at least two mating terminals 21. At least two connection assemblies 11 are respectively installed in at least two housing units for fastening at least two terminals 13 to at least two mating terminals 21. At least two cables 14 are respectively inserted into at least two housing units and electrically connected with at least two terminals 13. At least two end covers 15 are respectively sleeved on one ends of at least two housing units for fixing at least two cables 14 to at least two housing units.

However, the present invention is not limited to the illustrated embodiment. For example, the connector 1 can include: one terminal 13, one connection assembly 11, one cable 14 and one end cover 15.

As shown in Figures 1 to 10, in the illustrated embodiment, the safety cover 100 is an integral molded part. For example, the safety cover 100 can be integrally molded.

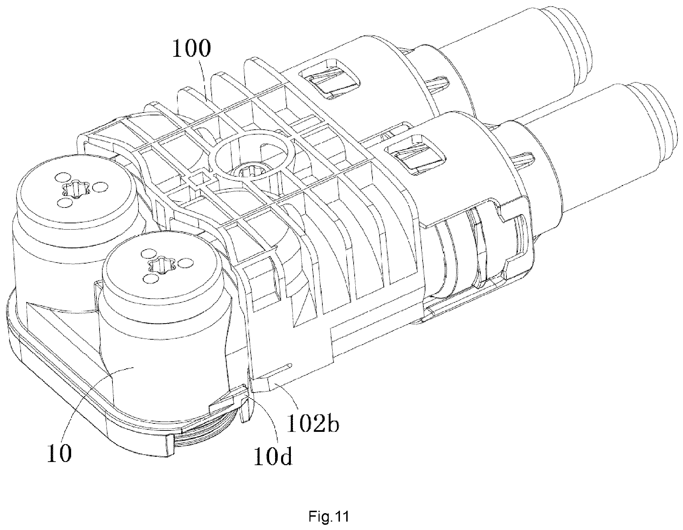

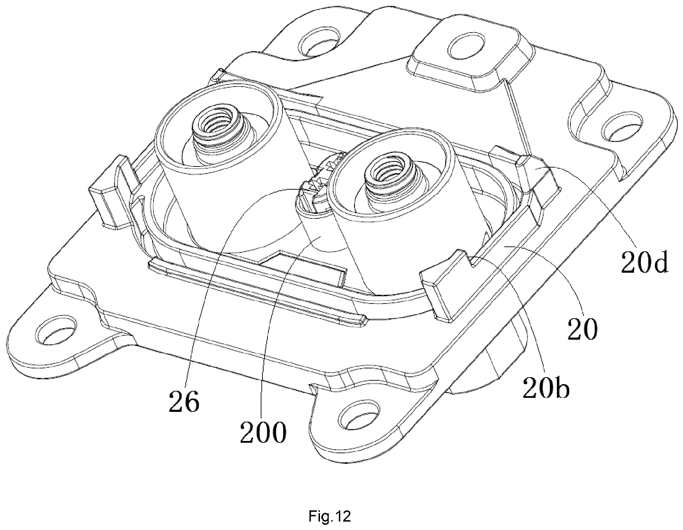

Figure 11 shows an illustrative view of connector 1 according to an exemplary embodiment of the present invention, wherein the connection assembly 11 and the mechanical connection member 12 are in the fastened position, and the safety cover 100 is in the initial position; Figure 12 shows an illustrative perspective view of the mating connector 2 according to an exemplary embodiment of the present invention.

As shown in Figures 1 to 12, in the illustrated embodiment, an elastic cantilever 102b is formed on the safety cover 100, and a limit protrusion 10d is formed on the housing 10. As shown in Figure 11, when the housing 10 is not mated with the mating housing 20 and the safety cover 100 is in the initial position, the elastic cantilever 102b is in the position of interference with the limit protrusion 10d to prevent the safety cover 100 from being moved from the initial position to the safe position.

As shown in Figures 1 to 12, in the illustrated embodiment, when the housing 10 has been mated with the mating housing 20 and the safety cover 100 is in the initial position, the elastic cantilever 102b is pushed by the unlocking part 20d on the mating housing 20 to a position that does not interfere with the limit protrusion 10d, so that the movement of the safety cover 100 will not be hindered by the limit protrusion 10d.

As shown in Figures 1 to 12, in the illustrated embodiment, when the housing 10 has been mated with the mating housing 20 and the safety cover 100 has been moved to the safe position, the free end of the elastic cantilever 102b rests against the stop part 20b of the mating housing 20 to limit the safety cover 100 at the safe position.

As shown in Figures 1 to 12, in the illustrated embodiment, a threaded hole 210 is formed on the mating terminal 21 or a threaded hole 210 is formed on the mating connection assembly 22 assembled with the mating terminal 21, and the connection assembly 11 includes a threaded connection member 110 connected to the threaded hole 210. A threaded connection hole 220 is formed on the mating housing 20, and the mechanical connection member 12 of the connector 1 has a threaded connection part 120 connected to the threaded connection hole 220.

As shown in Figures 1 to 12, in the illustrated embodiment, the mating connector 2 also includes an inner housing 200 made of insulation material. The inner housing 200 is installed in the mating housing 20. In the illustrated embodiment, the housing 10 and the mating housing 20 are conductive housings made of conductive material. The mating housing 20 has a flange portion 20a extending radially, and the threaded connection hole 220 is formed on the flange portion 20a.

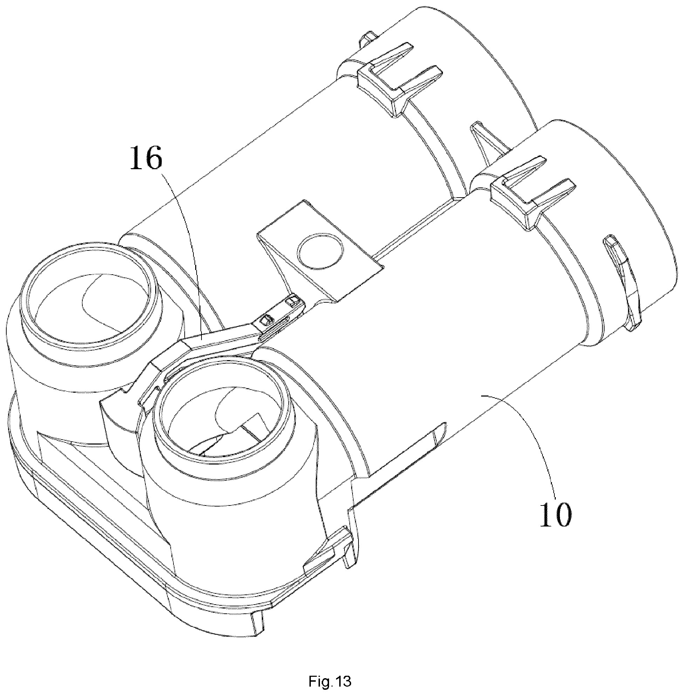

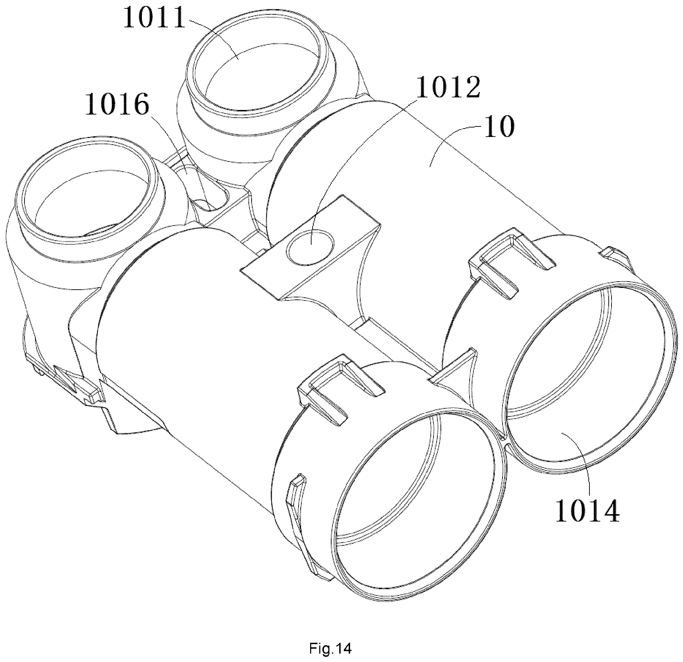

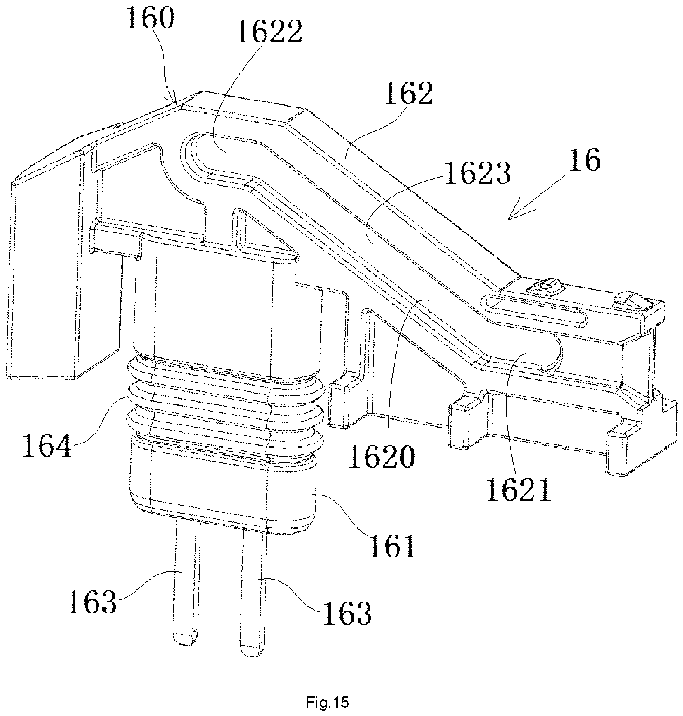

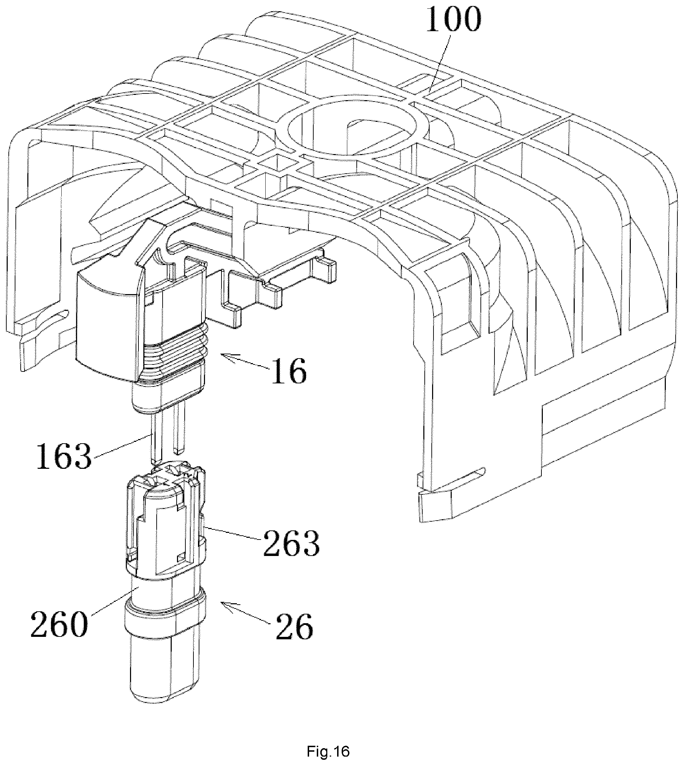

Figure 13 shows an illustrative assembly view of the housing 10 and the high-voltage interlock 16 of the connector 1 according to an exemplary embodiment of the present invention; Figure 14 shows an illustrative perspective view of the housing 10 of the connector 1 according to an exemplary embodiment of the present invention; Figure 15 shows an illustrative perspective view of the high-voltage interlock 16 of the connector 1 according to an exemplary embodiment of the present invention; Figure 16 shows an illustrative view of high-voltage interlock 16 and safety cover 100 of connector 1 and high-voltage interlock 26 of connector 2 according to an exemplary embodiment of the present invention, wherein the safety cover 100 is in the initial position and the high-voltage interlock 16 is in the disconnected position.

As shown in Figures 1 to 16, in an exemplary embodiment of the present invention, a connector 1 is also disclosed. The connector 1 includes: a housing 10, a terminal 13, a connection assembly 11, a safety cover 100 and a high-voltage interlock 16. The housing 10 is formed with a slot 1016 and a mounting port 1011. The terminal 13 is arranged in the housing 10. The connection assembly 11 is installed in the mounting port 1011 of the housing 10 and is suitable for fastening the terminal 13 to the mating terminal 21 of the mating connector 2. The safety cover 100 is movably mounted on the housing 10 and can be moved between the initial position where the connection assembly 11 is not covered by the safety cover 100 and the safety position where the connection assembly 11 is covered by the safety cover 100. The high voltage interlock 16 is movably installed in the slot 1016 and can be moved between the connected position where the high voltage interlock 16 is engaged with the mating high voltage interlock 26 of the mating connector 2 and the disconnected position where the high voltage interlock 16 is separated from the mating high voltage interlock 26.

As shown in Figures 1 to 16, in the illustrated embodiment, when the connector 1 is mated with the mating connector 2, and when the connection assembly 11 is not fastened, the connection assembly 11 is in the position of interference with the safety cover 100 to prevent the safety cover 100 from being moved from the initial position to the safe position.

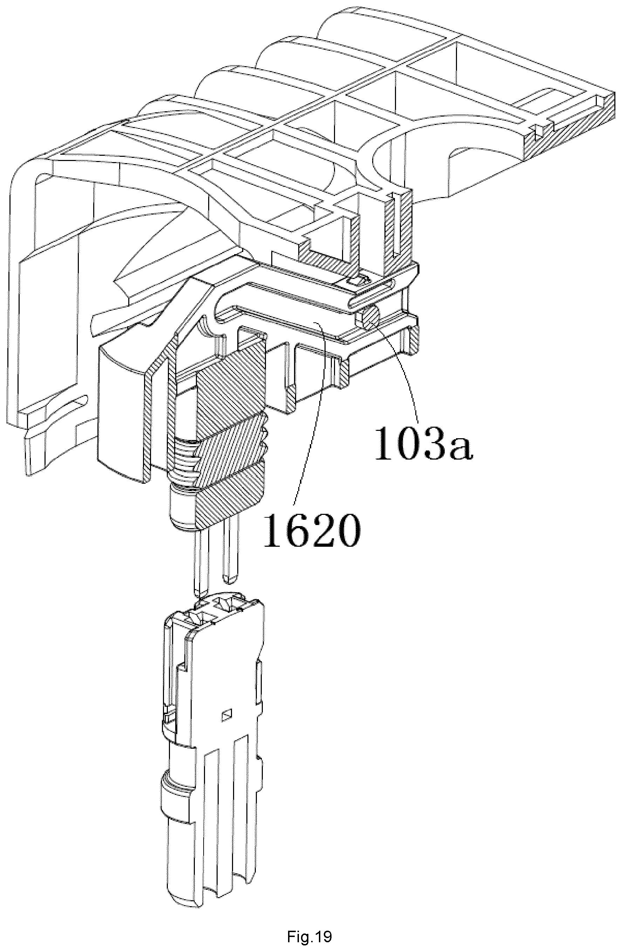

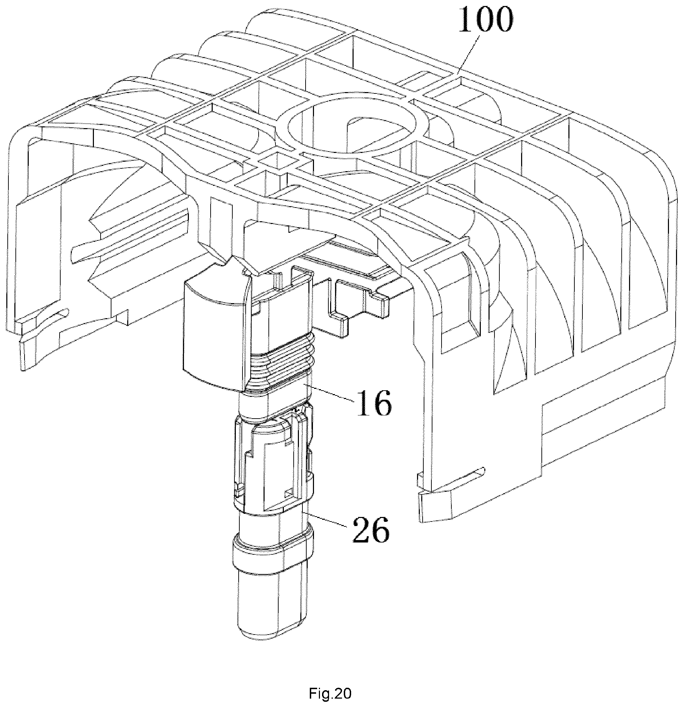

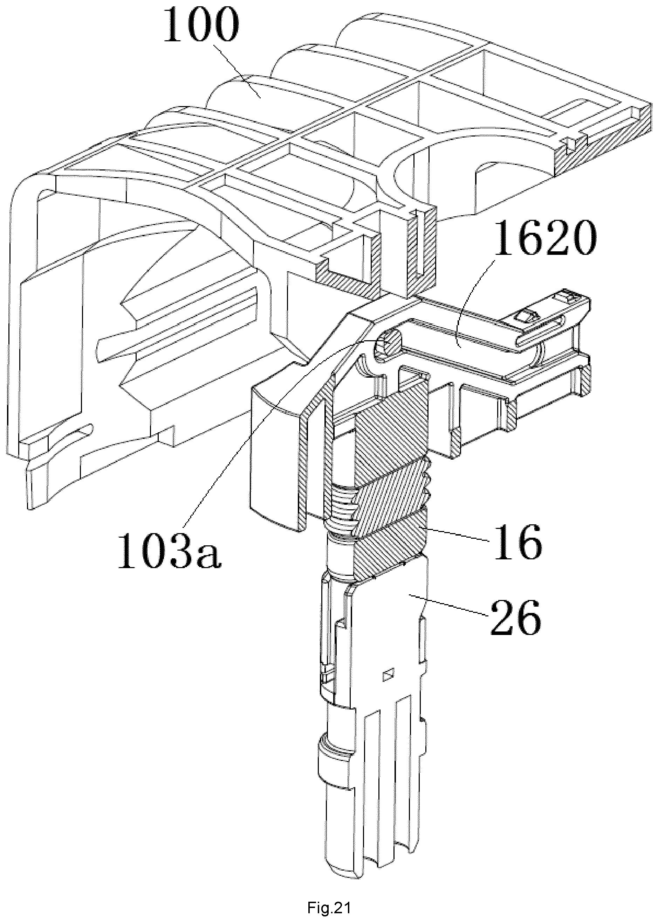

Figure 19 shows the sectional view of a high-voltage interlock 16 and a safety cover 100 of a connector 1 and a mating high-voltage interlock 26 of a mating connector 2 according to an exemplary embodiment of the present invention, wherein the safety cover 100 is in the safe position and the high-voltage interlock 16 is in the connected position; Figure 20 shows an illustrative view of a high-voltage interlock 16 and a safety cover 100 of a connector 1 and a mating high-voltage interlock 26 of a mating connector 2 according to an exemplary embodiment of the present invention, wherein the safety cover 100 is in the safe position and the high-voltage interlock 16 is in the connected position; Figure 21 shows the sectional view of a high-voltage interlock 16 and a safety cover 100 of a connector 1 and a mating high-voltage interlock 26 of a mating connector 2 according to an exemplary embodiment of the present invention, wherein the safety cover 100 is in the safe position and the high-voltage interlock 16 is in the connected position.

As shown in Figures 1-16 and Figures 19-21, in the illustrated embodiment, the safety cover 100 and the high voltage interlock 16 are connected in a sliding way to make them linked according to the following relationship: when the safety cover 100 is moved to the initial position, the high voltage interlock 16 is moved to the disconnected position; and when the safety cover 100 is moved to the safety position, the high-voltage interlock 16 is moved to the connected position.

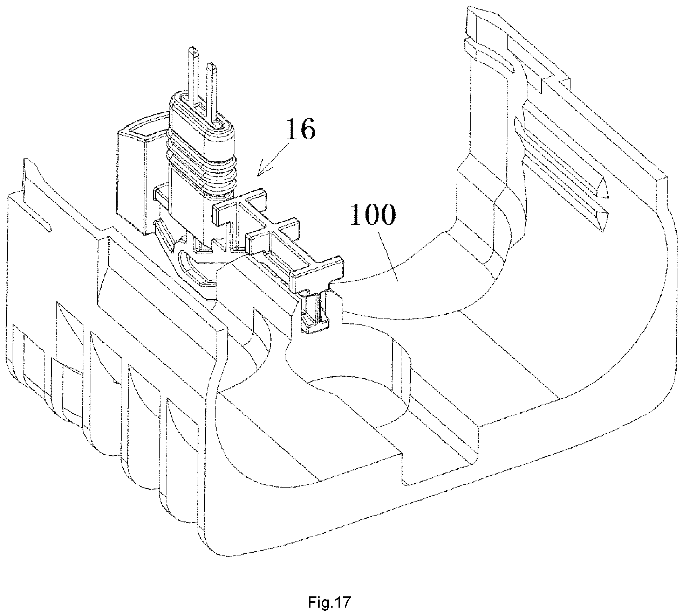

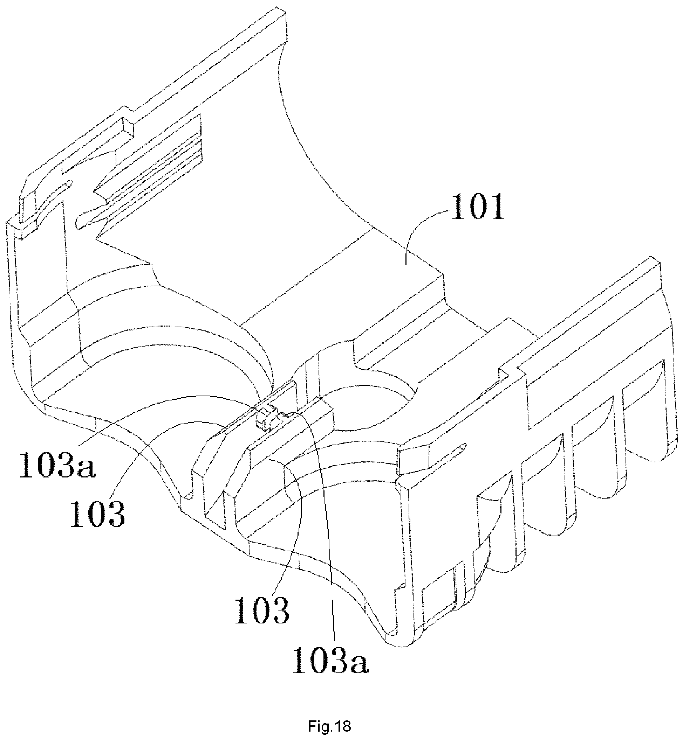

Figure 17 shows an illustrative assembly view of the high-voltage interlock 16 and the safety cover 100 of the connector 1 according to an exemplary embodiment of the present invention, wherein the safety cover 100 is in the initial position; Figure 18 shows an illustrative view of the safety cover 100 of connector 1 according to an exemplary embodiment of the present invention when viewed from the bottom, showing the structure connected with the high-voltage interlock 16.

As shown in Figures 1 to 21, in the illustrated embodiment, the high-voltage interlock 16 includes an insulator 161 and two detection terminals 163. The two detection terminals 163 are fixed to the insulator 161 for electrical connection to positive and negative electrodes of a high-voltage interlock circuit (not shown). When the high-voltage interlock 16 is moved to the connected position, the two detection terminals 163 of the high-voltage interlock 16 are electrically connected with the mating detection terminal 263 in the mating high-voltage interlock 26 to turn on the high-voltage interlock circuit. When the high-voltage interlock 16 is moved to the disconnected position, the two detection terminals 163 are separated from the mating detection terminal 263 to cut off the high-voltage interlock circuit.

As shown in Figures 1 to 21, in the illustrated embodiment, when the connector 1 is mated with the mating connector 2, and when the connection assembly 11 is not fastened, the connection assembly 11 is in the position of interference with the safety cover 100, so that the safety cover 100 cannot be moved from the initial position to the safe position. Therefore, when the connection assembly 11 is not fastened, the high-voltage interlock 16 is always in the disconnected position. Only when the connection assembly 11 is fastened, the high-voltage interlock 16 can be moved to the connected position.

As shown in Figures 1 to 21, in the illustrated embodiment, during mating the connector 1 with the mating connector 2, the high-voltage interlock circuit is turned on only after the high-voltage terminals (terminal 13 and terminal 21) are electrically connected; During the separation of connector 1 and mating connector 2, the high-voltage interlock circuit is cut off before the high-voltage terminals (terminal 13 and terminal 21) are separated. In this way, the high-voltage terminals (terminal 13 and terminal 21) can be avoided from being hot plugged and unplugged, and the use safety of the connector is improved.

As shown in Figures 1 to 21, in the illustrated embodiment, the safety cover 100 is configured to be moved between the initial position and the safety position in the first direction (the horizontal direction in the figures). The high-voltage interlock 16 is configured to be moved between the connected position and the disconnected position in the second direction (the vertical direction in the figures) perpendicular to the first direction.

As shown in Figures 1 to 21, in the illustrated embodiment, a guide slot 10b extending in the first direction is formed on one of the inner wall surface of the safety cover 100 and the outer wall surface of the housing 10, and a guide rib 102a extending in the first direction is formed on the other. The guide slot 10b is slidably mated with the guide rib 102a to guide the safety cover 100 to move between the initial position and the safety position in the first direction relative to the housing 10.

As shown in Figures 1 to 21, in the illustrated embodiment, the slot 1016 on the housing 10 extends in the second direction, and the insulator 160 of the high-voltage interlock 16 includes the first part 161 extending in the second direction. The first part 161 of the insulator 160 is slidably mated with the slot 1016 of the housing 10 to guide the high-voltage interlock 16 to move between the connected position and the disconnected position in the second direction relative to the housing 10.

As shown in Figures 1 to 21, in the illustrated embodiment, the insulator 160 of the high-voltage interlock 16 also includes a second part 162 connected with the first part 161, and the second part 162 is located outside the housing 10. The detection terminal 163 is fixed to the first part 161 of the insulator 160, and the second part 162 of the insulator 160 is slidably connected with the safety cover 100.

As shown in Figures 1 to 21, in the illustrated embodiment, a pair of support walls 103 is formed on the inner wall surface of the top wall 101 of the safety cover 100, and a part of the second part 162 of the insulator 160 is arranged in a gap between the pair of support walls 103. A chute 1620 is formed on each side of the second part 162 of the insulator 160. The pair of support walls 103 are respectively formed with convex parts 103a which are slidably connected with the chutes 1620. The chute 1620 includes a main part 1623 extending a predetermined length in a direction inclined to the first direction to convert the movement of the safety cover 100 in the first direction (the horizontal direction in the figure) into the movement of the high-voltage interlock 16 in the second direction (the vertical direction in the figure).

As shown in Figures 1 to 21, in the illustrated embodiment, the chute 1620 also includes a first end part 1621 and a second end part 1622 which are respectively connected with the two ends of the main part 1623 of the chute 1620, and the first end part 1621 and the second end part 1622 extend in the first direction. When the safety cover 100 is moved to the initial position, the convex part 103a is moved to the first end part 1621 of the chute 1620. When the safety cover 100 is moved to the safety position, the convex part 103a is moved to the second end part 1622 of the chute 1620.

As shown in Figures 1 to 21, in the illustrated embodiment, the high-voltage interlock 16 also includes a sealing ring 164. The seal ring 164 is sleeved on the first part 161 of the insulator 160 to seal the gap between the first part 161 of the insulator 160 and the slot 1016 of the housing 10.

As shown in Figures 1 to 21, in the illustrated embodiment, the mating connector 2 includes an inner housing 200 made of insulation material, and the mating high-voltage interlock 26 is fixedly installed in the inner housing 200. The mating high-voltage interlock 26 includes an insulator 260 and a mating detection terminal 263 arranged in the insulator 260. When the high-voltage interlock 16 is mated with the mating high-voltage interlock 26, the mating detection terminal 263 is bridged between the two detection terminals 163 to connect the two detection terminals 163.

As shown in Figures 1 to 21, in an exemplary embodiment of the present invention, a connector assembly is also disclosed, which includes a connector 1 and a mating connector 2 suitable for mating with connector 1. The mating connector 2 includes a mating housing 20, a mating terminal 21 and a mating high-voltage interlock 26. The mating housing 20 is suitable for mating with the housing 10 of the connector 1. The mating terminal 21 is arranged in the mating housing 20 for electrical connection with the terminal 13 of the connector 1. The mating high-voltage interlock 26 is arranged in the mating housing 20 for mating with the high-voltage interlock 16 of the connector 1.

Please note that the present invention is not limited to the illustrated embodiments. According to the technical enlightenment of the present invention, it is easy for ordinary technicians in the art to think of other variations, for example, the following two variations:

### Example of the first variation

Refer to Figures 1-12 above. In the first variation, a connector 1 is disclosed, which includes a housing 10, a mechanical connection member 12 and a safety cover 100. The safety cover 100 is slidably mounted on the housing 10. The mechanical connection member 12 is mounted on the housing 10 and is suitable for threaded connection with the mating housing 20 of the mating connector 2 to fasten the housing 10 to the mating housing 20. The mechanical connection member 12 has a second operation part 121 exposed from the housing 10, enabling the mechanical connection member 12 to be fastened or loosened by operating the second operation part 121.

Refer to Figures 1-12 above, during the mating of connector 1 and mating connector 2, when the mechanical connection member 12 is not fastened, the second operation part 121 is in the position of interference with the safety cover 100 to prevent the safety cover 100 from being moved from the initial position to the safe position.

Refer to the above Figures 1-12. When the mechanical connection member 12 has been fastened during the mating of connector 1 and mating connector 2, the second operation part 121 is in a position that does not interfere with the safety cover 100 to allow the safety cover 100 to be moved from the initial position to the safe position;
Refer to the above Figures 1-12, when the safety cover 100 is in the initial position, the second operation part 121 is not covered by the safety cover 100 to allow the mechanical connection member 12 to be fastened or loosened by operating the second operation part 121;
Refer to Figures 1-12 above, when the safety cover 100 is in the safe position, the second operation part 121 is covered by the safety cover 100 to prevent the mechanical connection member 12 from being loosened by operating the second operation part 121.

### Example of the second variation

Refer to Figures 1-12 above, in the second variation, a connector 1 is disclosed, which includes: a housing 10, a terminal 13, a connection assembly 11 and a safety cover 100. The terminal 13 is arranged in the housing 10. The connection assembly 11 is installed in the housing 10 and is suitable for fastening the terminal 13 to a mating terminal 21 of a mating connector 2. The safety cover 100 is slidably mounted on the housing 10. The connection assembly 11 has a first operation part 111 exposed from the housing 10, which enables the connection assembly 11 to be fastened or loosened by operating the first operation part 111.

Refer to Figures 1-12 above, during the mating of connector 1 and mating connector 2, when the connection assembly 11 is not fastened, the first operation part 111 is in the position of interference with the safety cover 100 to prevent the safety cover 100 from being moved from the initial position to the safe position.

Refer to Figures 1-12 above, during the mating of connector 1 and mating connector 2, when the connection assembly 11 has been fastened, the first operation part 111 is in a position that does not interfere with the safety cover 100 to allow the safety cover 100 to be moved from the initial position to the safe position.

Refer to the above Figures 1-12, when the safety cover 100 is in the initial position, the first operation part 111 is not covered by the safety cover 100 to allow the connection assembly 11 to be fastened or loosened by operating the first operation part 111.

Refer to Figures 1-12 above. When the safety cover 100 is in the safe position, the first operation part 111 is covered by the safety cover 100 to prevent the connection assembly 11 from being loosened by operating the first operation part 111.

## Claims

1. A connector (1), comprising:
a housing (10) which is formed with a slot (1016) and a mounting port (1011);
a connection assembly (11) which is installed in the mounting port (1011) of the housing (10) and is adapted to fasten a terminal (13) of the connector (1) to a mating terminal (21) of a mating connector (2);
a safety cover (100) which is slidably mounted on the housing (10) and is capable of being slidably moved between an initial position where the connection assembly (11) is not covered by the safety cover (100) and a safety position where the connection assembly (11) is covered by the safety cover (100); and
a high-voltage interlock (16) which is movably installed in the slot (1016) and is capable of being moved between a connected position where the high-voltage interlock (16) is electrically engaged with a mating high-voltage interlock (26) of the mating connector (2) to turn on a high-voltage interlock circuit and a disconnected position where the high-voltage interlock (16) is separated from the mating high-voltage interlock (26) to cut off the high-voltage interlock circuit,
wherein, in the process of mating the connector (1) with the mating connector (2), when the connection assembly (11) is not fastened, the connection assembly (11) is in a position that interferes with the safety cover (100) to prevent the safety cover (100) from being moved from the initial position to the safety position,
wherein the safety cover (100) is slidably connected with the high-voltage interlock (16), so that the safety cover (100) and the high-voltage interlock (16) are physically linked according to the following relationship:
when the safety cover (100) is moved to the initial position, the high-voltage interlock (16) is moved to the disconnected position; and
when the safety cover (100) is moved to the safety position, the high-voltage interlock (16) is moved to the connected position,
wherein the safety cover (100) is configured to be moved between the initial position and the safety position in a first direction and the high-voltage interlock (16) is configured to be moved between the connected position and the disconnected position in a second direction perpendicular to the first direction.

2. The connector (1) according to claim 1,
wherein the high-voltage interlock (16) comprises:
an insulator (161); and
two detection terminals (163) which are fixed to the insulator (161) and are used to electrically connect to positive and negative electrodes of the high-voltage interlock circuit respectively,
wherein, when the high-voltage interlock (16) is moved to the connected position, the two detection terminals (163) of the high-voltage interlock (16) are electrically connected with a mating detection terminal (263) of the mating high-voltage interlock (26) to turn on the high-voltage interlock circuitwherein, when the high-voltage interlock (16) is moved to the disconnected position, the two detection terminals (163) are separated from the mating detection terminal (263) to cut off the high-voltage interlock circuit.

3. The connector (1) according to claim 2,
wherein a guide slot (10b) extending in the first direction is formed on one of the inner wall surface of the safety cover (100) and the outer wall surface of the housing (10), and a guide rib (102a) extending in the first direction is formed on the other;
wherein the guide slot (10b) is slidably mated with the guide rib (102a) to guide the safety cover (100) to move between the initial position and the safety position in the first direction relative to the housing (10); in particular
wherein the slot (1016) on the housing (10) extends in the second direction, the insulator (160) of the high-voltage interlock (16) comprises a first part (161) extending in the second direction, and
the first part (161) of the insulator (160) is slidably mated with the slot (1016) of the housing (10) to guide the high-voltage interlock (16) to move between the connected position and the disconnected position in the second direction relative to the housing (10).

4. The connector (1) according to claim 3,
wherein the insulator (160) of the high-voltage interlock (16) further comprises a second part (162) which is connected with the first part (161) and is located outside the housing (10); and
wherein the detection terminal (163) is fixed to the first part (161) of the insulator (160), and the second part (162) of the insulator (160) is slidably connected with the safety cover (100).

5. The connector (1) according to claim 4,
wherein a pair of support walls (103) are formed on the inner wall surface of the safety cover (100), and a part of the second part (162) of the insulator (160) is arranged in a gap between the pair of support walls (103),
a chute (1620) is formed on each side of the second part (162) of the insulator (160) facing the support wall (103), and a convex part (103a) is formed on the support wall (103) and is slidably connected with the chute (1620), and
the chute (1620) comprises a main part (1623) extending a predetermined length in a direction inclined to the first direction to convert the movement of the safety cover (100) in the first direction into the movement of the high-voltage interlock (16) in the second direction, in particular
wherein the chute (1620) also includes a first end part (1621) and a second end part (1622) which are respectively connected with the two ends of the main part (1623) of the chute (1620), and the first end part (1621) and the second end part (1622) extend along the first direction;
wherein, when the safety cover (100) is moved to the initial position, the convex part (103a) is moved into the first end part (1621) of the chute (1620);
wherein, when the safety cover (100) is moved to the safety position, the convex part (103a) is moved into the second end part (1622) of the chute (1620).

6. The connector (1) according to claim 3,
wherein the high-voltage interlock (16) also includes a sealing ring (164), which is sleeved on the first part (161) of the insulator (160) and used to seal a gap between the first part (161) of the insulator (160) and the slot (1016) of the housing (10).

7. The connector (1) according to any one of claims 1-6,
wherein the connection assembly (11) has a first operation part (111) exposed from the housing (10), so that the connection assembly (11) is capable of being fastened or loosened by operating the first operation part (111);
wherein, in the process of mating the connector (1) with the mating connector (2), when the connection assembly (11) is not fastened, the first operation part (111) is in a position that interferes with the safety cover (100) to prevent the safety cover (100) from being moved from the initial position to the safe position;
wherein, when the safety cover (100) is in the initial position, the first operation part (111) is not covered by the safety cover (100) to allow the connection assembly (11) to be fastened or loosened by operating the first operation part (111);
wherein, when the safety cover (100) is in the safety position, the first operation part (111) is covered by the safety cover (100) to prevent the connection assembly (11) from being loosened by operating the first operation part (111).

8. The connector (1) according to claim 7,
wherein, in the process of mating the connector (1) with the mating connector (2), when the connection assembly (11) has been fastened, the first operation part (111) is in a position that does not interfere with the safety cover (100), to allow the safety cover (100) to be moved from the initial position to the safe position.

9. The connector (1) according to claim 7, further comprising:
a mechanical connection member (12) which is installed on the housing (10) and is suitable for threaded connection with a mating housing (20) of the mating connector (2) to fasten the housing (10) to the mating housing (20),
wherein the mechanical connection member (12) has a second operation part (121) exposed from the housing (10), so that the mechanical connection member (12) is capable of being fastened or loosened by operating the second operation part (121);
wherein, in the process of mating the connector (1) with the mating connector (2), when the mechanical connection member (12) is not fastened, the second operation part (121) is in a position of interference with the safety cover (100) to prevent the safety cover (100) from being moved from the initial position to the safe position;
wherein, when the safety cover (100) is in the initial position, the second operation part (121) is not covered by the safety cover (100) to allow the mechanical connection member (12) to be fastened or loosened by operating the second operation part (121);
wherein, when the safety cover (100) is in the safety position, the second operation part (121) is covered by the safety cover (100) to prevent the mechanical connection member (12) from being loosened by operating the second operation part (121); in particular
wherein, in the process of mating the connector (1) with the mating connector (2), when the connection assembly (11) and the mechanical connection member (12) are fastened, the first operation part (111) and the second operation part (121) are in a position that does not interfere with the safety cover (100), to allow the safety cover (100) to be moved from the initial position to the safe position.

10. The connector (1) according to claim 9,
wherein the safety cover (100) comprises:
a top wall (101) which is formed with an operation hole (101a); and
a pair of side walls (102) which are respectively connected to both sides of the top wall (101),
wherein, when the safety cover (100) is in the initial position, the first operation part (111) is located outside the safety cover (100), and the second operation part (121) is exposed from the safety cover (100) through the operation hole (101a), in particular
wherein a limit part (101b) is formed on the inner wall surface of the top wall (101) of the safety cover (100), and
when the safety cover (100) is moved from the initial position to the safe position, the limit part (101b) rests against the first operation part (111) to limit the safety cover (100) at the safe position.

11. The connector (1) according to any one of claims 1-10, further comprising:
a terminal (13) which is arranged in the housing (10) for electrical connection with the mating terminal (21) of the mating connector (2).

12. The connector (1) according to any one of claims 1-6, further comprising:
a cable (14), one end of which is inserted into the housing (10) in the first direction and electrically connected with the terminal (13); and
an end cover (15) which is sleeved on one end of the housing (10) and is used to fix the cable (14) to the housing (10).

13. The connector (1) according to claim 12,
wherein a cable port (1014) allowing the cable (14) to be inserted in the first direction is formed at one end of the housing (10);
wherein the mounting port (1011) is formed on the top of the other end of the housing (10) to allow the connection assembly (11) to be inserted in the second direction perpendicular to the first direction;
wherein a mating port is formed on the bottom of the other end of the housing (10) to allow the connector (1) to mate with the mating connector (2) in the second direction.

14. The connector (1) according to any one of claims 1-6,
wherein an elastic cantilever (102b) is formed on the safety cover (100), and a limit protrusion (10d) is formed on the housing (10);
wherein, when the housing (10) is not mated with the mating housing (20) and the safety cover (100) is in the initial position, the elastic cantilever (102b) is in a position of interference with the limit protrusion (10d) to prevent the safety cover (100) from being moved from the initial position to the safety position, in particular
wherein, when the housing (10) has been mated with the mating housing (20) and the safety cover (100) is in the initial position, the elastic cantilever (102b) is pushed by an unlocking part (20d) of the mating housing (20) to a position that does not interfere with the limit protrusion (10d), so that the movement of the safety cover (100) will not be hindered by the limit protrusion (10d).

15. A connector assembly, comprising:
the connector (1) according to any one of claims 1 to 14; and
a mating connector (2) adapted to mate with the connector (1),
wherein the mating connector (2) comprises:
a mating housing (20) which is suitable for mating with the housing (10) of the connector (1);
a mating terminal (21) which is arranged in the mating housing (20) for electrical connection with the terminal (13) of the connector (1); and
a mating high-voltage interlock (26) which is arranged in the mating housing (20) for mating with the high-voltage interlock (16) of the connector (1).

## Patentansprüche

1. Verbinder (1), der umfasst:
ein Gehäuse (10), das mit einem Schlitz (1016) und einer Montageöffnung (1011) versehen ist;
eine Verbindungsanordnung (11), die in der Montageöffnung (1011) des Gehäuses (10) installiert und zum Verriegeln eines Anschlusses (13) des Verbinders (1) an einem Gegenanschluss (21) eines Gegenverbinders (2) eingerichtet ist;
eine Schutzabdeckung (10), die verschiebbar an dem Gehäuse (10) angebracht ist und gleitend zwischen einer Ausgangsposition, in der die Verbindungsanordnung (11) nicht mit der Schutzabdeckung (100) abgedeckt ist, und einer Schutzposition bewegt werden kann, in der die Verbindungsanordnung (11) mit der Schutzabdeckung (100) abgedeckt ist; sowie
einen Hochvolt-Interlock (16), der beweglich in dem Schlitz (1016) installiert ist und zwischen einer verbundenen Position, in der der Hochvolt-Interlock (16) mit einem Gegen-Hochvolt-Interlock (26) des Gegenverbinders (2) elektrisch in Eingriff ist, um einen Hochvolt-Interlock-Kreis zu schließen, und einer getrennten Position bewegt werden kann, in der der Hochvolt-Interlock (16) von dem Gegen-Hochvolt-Interlock (26) getrennt ist, um den Hochvolt-Interlock-Kreis zu unterbrechen,
wobei bei dem Vorgang des Zusammensteckens des Verbinders (1) mit dem Gegenverbinder (2), wenn die Verbindungsanordnung (11) nicht verriegelt ist, die Verbindungsanordnung (11) eine Position einnimmt, in der Blockade mit der Schutzabdeckung (11) auftritt und verhindert wird, dass die Schutzabdeckung (100) von der Ausgangsposition an die Schutzposition bewegt wird,
wobei die Schutzabdeckung (100) verschiebbar so mit dem Hochvolt-Interlock (16) verbunden ist, dass die Schutzabdeckung (100) und der Hochvolt-Interlock (16) in der folgenden Beziehung physisch verbunden sind:
wenn die Schutzabdeckung (100) an die Ausgangsposition bewegt wird, wird der Hochvolt-Interlock (16) an die getrennte Position bewegt; und
wenn die Schutzabdeckung (100) an die Schutzposition bewegt wird, wird der Hochvolt-Interlock (16) an die verbundene Position bewegt,
wobei die Schutzabdeckung(100) so ausgeführt ist, dass sie in einer ersten Richtung zwischen der Ausgangsposition und der Schutzposition bewegt wird, und der Hochvolt-Interlock (16) so ausgeführt ist, dass er in einer zweiten Richtung senkrecht zu der ersten Richtung zwischen der verbundenen Position und der getrennten Position bewegt wird.

2. Verbinder (1) nach Anspruch 1,
wobei der Hochvolt-Interlock (16) umfasst:
einen Isolator (161); sowie
zwei Erfassungsanschlüsse (163), die an dem Isolator (161) befestigt sind und dazu dienen, elektrische Verbindung positiver bzw. negativer Elektroden des Hochvolt-Interlock-Kreises herzustellen,
wobei, wenn der Hochvolt-Interlock (16) an die verbundene Position bewegt wird, die zwei Erfassungsanschlüsse (163) des Hochvolt-Interlocks (16) elektrisch mit einem Gegen-Erfassungsanschluss (263) des Gegen-Hochvolt-Interlocks (26) verbunden sind, um den Hochvolt-Interlock-Kreis zu schließen, wobei, wenn der Hochvolt-Interlock (16) an die getrennte Position bewegt wird, die zwei Erfassungsanschlüsse (163) von dem Gegen-Erfassungsanschluss (263) getrennt werden, um den Hochvolt-Interlock-Kreis zu unterbrechen.

3. Verbinder (1) nach Anspruch 2,
wobei ein Führungsschlitz (10b), der sich in der ersten Richtung erstreckt, an der Innenwandfläche der Schutzabdeckung (100) oder der Außenwandfläche des Gehäuses (10) ausgebildet ist und eine Führungsrippe (102a), die sich in der ersten Richtung erstreckt, an der jeweils anderen Fläche ausgebildet ist;
wobei der Führungsschlitz (10b) verschiebbar mit der Führungsrippe (102a) in Passung ist, um die Schutzabdeckung (100) bei Bewegung zwischen der Ausgangsposition und der Schutzposition in der ersten Richtung relativ zu dem Gehäuse (10) zu führen;
wobei insbesondere der Schlitz (1016) an dem Gehäuse (10) sich in der zweiten Richtung erstreckt, der Isolator (160) des Hochvolt-Interlocks (16) einen ersten Teil (161) umfasst, der sich in der zweiten Richtung erstreckt, und
der erste Teil (161) des Isolators (160) verschiebbar mit dem Schlitz (1016) des Gehäuses (10) in Passung ist, um den Hochvolt-Interlock (16) bei Bewegung zwischen der verbundenen Position und der getrennten Position in der zweiten Richtung relativ zu dem Gehäuse (10) zu führen.

4. Verbinder (1) nach Anspruch 3,
wobei der Isolator (160) des Hochvolt-Interlocks (16) des Weiteren einen zweiten Teil (162) umfasst, der mit dem ersten Teil (161) verbunden ist und sich außerhalb des Gehäuses (10) befindet; und
wobei der Erfassungsanschluss (163) an dem ersten Teil (161) des Isolators (160) fixiert ist und der zweite Teil (162) des Isolators (160) verschiebbar mit der Schutzabdeckung (100) verbunden ist.

5. Verbinder (1) nach Anspruch 4,
wobei ein Paar Stützwände (103) an der Innenwandfläche der Schutzabdeckung (100) ausgebildet ist und ein Abschnitt des zweiten Teils (162) des Isolators (160) in einem Spalt zwischen den paarigen Stützwänden (103) angeordnet ist,
eine Rinne (1620) an jeder Seite des zweiten Teils (162) des Isolators (160), der Stützwand (103) zugewandt, ausgebildet ist und ein konvexer Teil (103a) an der Stützwand (103) ausgebildet und verschiebbar mit der Rinne (1620) verbunden ist, und
die Rinne (1620) einen Hauptteil (1623) umfasst, der sich über eine vorgegebene Länge in einer zu der ersten Richtung geneigten Richtung erstreckt, um die Bewegung der Schutzabdeckung (100) in der ersten Richtung in die Bewegung des Hochvolt-Interlocks (16) in der zweiten Richtung umzuwandeln,
wobei insbesondere die Rinne (1620) des Weiteren einen ersten Endteil (1621) sowie einen zweiten Endteil (1622) einschließt, die jeweils mit den zwei Enden des Hauptteils (1623) der Rinne (1620) verbunden sind, und der erste Endteil (1621) sowie der zweite Endteil (1622) sich in der ersten Richtung erstrecken;
wobei, wenn die Schutzabdeckung (100) an die Ausgangsposition bewegt wird, der konvexe Teil (103a) in den ersten Endteil (1621) der Rinne (1620) hinein bewegt wird;
wobei, wenn die Schutzabdeckung (100) an die Schutzposition bewegt wird, der konvexe Teil (103a) in den zweiten Endteil (1622) der Rinne (1620) hinein bewegt wird.

6. Verbinder (1) nach Anspruch 3,
wobei der Hochvolt-Interlock (16) des Weiteren einen Dichtungsring (164) aufweist, der auf den ersten Teil (161) des Isolators (160) aufgeschoben ist und dazu dient, einen Spalt zwischen dem ersten Teil (161) des Isolators (160) und dem Schlitz (1016) des Gehäuses (10) abzudichten.

7. Verbinder (1) nach einem der Ansprüche 1 - 6,
wobei die Verbindungsanordnung (11) ein erstes Betätigungsteil (111) aufweist, das an dem Gehäuse (10) so freiliegt, dass die Verbindungsanordnung (11) durch Betätigen des ersten Betätigungsteils (111) verriegelt oder gelöst werden kann;
wobei bei dem Vorgang des Zusammensteckens des Verbinders (1) mit dem Gegenverbinder (2), wenn die Verbindungsanordnung (11) nicht verriegelt ist, das erste Betätigungsteil (11) eine Position einnimmt, in der Blockade mit der Schutzabdeckung (11) auftritt und verhindert wird, dass die Schutzabdeckung (100) von der Ausgangsposition an die Schutzposition bewegt wird;
wobei, wenn sich die Schutzabdeckung (100) in der Ausgangsposition befindet, das erste Betätigungsteil (111) nicht durch die Schutzabdeckung (100) abgedeckt wird und zugelassen wird, dass die Verbindungsanordnung (11) durch Betätigen des ersten Betätigungsteils (111) verriegelt oder gelöst wird;
wobei, wenn sich die Schutzabdeckung (100) in der Schutzposition befindet, das erste Betätigungsteil (111) durch die Schutzabdeckung (100) abgedeckt wird und verhindert wird, dass die Verbindungsanordnung (11) durch Betätigen des ersten Betätigungsteils (111) gelöst wird.

8. Verbinder (1) nach Anspruch 7,
wobei bei dem Vorgang des Zusammensteckens des Verbinders (1) mit dem Gegenverbinder (2), wenn die Verbindungsanordnung (11) verriegelt worden ist, das erste Betätigungsteil (11) eine Position einnimmt, in der keine Blockade mit der Schutzabdeckung (11) auftritt und zugelassen wird, dass die Schutzabdeckung (100) von der Ausgangsposition an die Schutzposition bewegt wird.

9. Verbinder (1) nach Anspruch 7, der des Weiteren umfasst:
ein mechanisches Verbindungselement (12), das an dem Gehäuse (10) installiert ist und sich zur Schraubverbindung mit einem Gegengehäuse (20) des Gegenverbinders (2) zum Verriegeln des Gehäuses (10) an dem Gegengehäuse (20) eignet,
wobei das mechanische Verbindungselement (12) ein zweites Betätigungsteil (121) aufweist, das an dem Gehäuse (10) so freiliegt, dass das mechanische Verbindungselement (12) durch Betätigen des zweiten Betätigungsteils (121) verriegelt oder gelöst werden kann;
wobei bei dem Vorgang des Zusammensteckens des Verbinders (1) mit dem Gegenverbinder (2), wenn das mechanische Verbindungselement (12) nicht verriegelt ist, das zweite Betätigungsteil (11) eine Position einnimmt, in der Blockade mit der Schutzabdeckung (11) auftritt und verhindert wird, dass die Schutzabdeckung (100) von der Ausgangsposition an die Schutzposition bewegt wird;
wobei, wenn sich die Schutzabdeckung (100) in der Ausgangsposition befindet, das zweite Betätigungsteil (121) nicht durch die Schutzabdeckung (100) abgedeckt wird und zugelassen wird, dass das mechanische Verbindungselement (12) durch Betätigen des zweiten Betätigungsteils (121) verriegelt oder gelöst wird;
wobei, wenn sich die Schutzabdeckung (100) in der Schutzposition befindet, das zweite Betätigungsteil (121) durch die Schutzabdeckung (100) abgedeckt wird und verhindert wird, dass das mechanische Verbindungselement (12) durch Betätigen des zweiten Betätigungsteils (121) gelöst wird;
wobei insbesondere bei dem Vorgang des Zusammensteckens des Verbinders (1) mit dem Gegenverbinder (2), wenn die Verbindungsanordnung (11) und das mechanische Verbindungselement (12) verriegelt sind, das erste Betätigungsteil (111) und das zweite Betätigungsteil (121) eine Position einnehmen, in der eine Blockade mit der Schutzabdeckung (11) auftritt und zugelassen wird, dass die Schutzabdeckung (100) von der Ausgangsposition an die Schutzposition bewegt wird.

10. Verbinder (1) nach Anspruch 9,
wobei die Schutzabdeckung (100) umfasst:
eine obere Wand (101), die mit einer Betätigungsöffnung (101a) versehen ist; sowie
ein Paar Seitenwände (102), die jeweils mit beiden Seiten der oberen Wand (101) verbunden sind,
wobei, wenn die Schutzabdeckung (100) die Ausgangsposition einnimmt, sich das erste Betätigungsteil (111) außerhalb der Schutzabdeckung (100) befindet und das zweite Betätigungsteil (121) an der Schutzabdeckung (100) über die Betätigungsöffnung (101a) freiliegt,
wobei insbesondere ein Begrenzungsteil (101b) an der Innenwandfläche der oberen Wand (101) der Schutzabdeckung (100) ausgebildet ist, und
wenn die Schutzabdeckung (100) von der Ausgangsposition an die Schutzposition bewegt wird, das Begrenzungsteil (101b) an dem ersten Betätigungsteil (111) anliegt, um die Schutzabdeckung (100) auf die Schutzposition zu begrenzen.

11. Verbinder (1) nach einem der Ansprüche 1 - 10, der des Weiteren umfasst:
einen Anschluss (13), der in dem Gehäuse (10) zur elektrischen Verbindung mit dem Gegenanschluss (21) des Gegenverbinders (2) angeordnet ist.

12. Verbinder (1) nach einem der Ansprüche 1 - 6, der des Weiteren umfasst:
ein Kabel (14), dessen eines Ende in das Gehäuse (10) in der ersten Richtung eingeführt und elektrisch mit dem Anschluss (13) verbunden ist; sowie eine Endabdeckung (15), die auf ein Ende des Gehäuses (10) aufgeschoben ist und dazu dient, das Kabel (14) an dem Gehäuse (10) zu befestigen.

13. Verbinder (1) nach Anspruch 12,
wobei eine Kabelöffnung (1014), die Einführen des Kabels (14) in der ersten Richtung zulässt, an einem Ende des Gehäuses (10) ausgebildet ist;
wobei die Montageöffnung (1011) an der Oberseite des anderen Endes des Gehäuses (10) ausgebildet ist, um Einführen der Verbindungsanordnung (11) in der zweiten Richtung senkrecht zu der ersten Richtung zuzulassen;
wobei eine Gegenöffnung an der Unterseite des anderen Endes des Gehäuses (10) ausgebildet ist, um Zusammenstecken des Verbinders (1) mit dem Gegenverbinder (2) in der zweiten Richtung zuzulassen.

14. Verbinder (1) nach einem der Ansprüche 1 - 6,
wobei ein elastischer Ausleger (102b) an der Schutzabdeckung (100) ausgebildet ist und ein Begrenzungsvorsprung (10d) an dem Gehäuse (10) ausgebildet ist;
wobei, wenn das Gehäuse (10) nicht mit dem Gegengehäuse (20) zusammengesteckt ist und sich die Schutzabdeckung (100) in der Ausgangsposition befindet, der elastische Ausleger (102b) eine Position einnimmt, in der Blockade mit dem Begrenzungsvorsprung (10d) auftritt und verhindert wird, dass die Schutzabdeckung (10d) von der Ausgangsposition an die Schutzposition bewegt wird,
wobei insbesondere, wenn das Gehäuse (10) mit dem Gegengehäuse (20) zusammengesteckt worden ist und sich die Schutzabdeckung (100) in der Ausgangsposition befindet, der elastische Ausleger (102b) durch ein Entriegelungsteil (20d) des Gegengehäuses (20) an eine Position gedrückt wird, an der keine Blockade mit dem Begrenzungsvorsprung (10d) auftritt, so dass die Bewegung der Schutzabdeckung (100) durch den Begrenzungsvorsprung (10d) nicht behindert wird.

15. Verbinderanordnung, die umfasst:
den Verbinder (1) nach einem der Ansprüche 1 bis 14; sowie
einen Gegenverbinder (2), der zum Zusammenstecken mit dem Verbinder (1) eingerichtet ist,
wobei der Gegenverbinder (2) umfasst:
ein Gegengehäuse (20), das zum Zusammenstecken mit dem Gehäuse (10) des Verbinders (1) geeignet ist;
einen Gegenanschluss (21), der in dem Gegengehäuse (20) zur elektrischen Verbindung mit dem Anschluss (13) des Verbinders (1) angeordnet ist; sowie
einen Gegen-Hochvolt-Interlock (26), der in dem Gegengehäuse (20) zum Zusammenstecken mit dem Hochvolt-Interlock (16) des Verbinders (1) angeordnet ist.

## Revendications

1. Connecteur (1), comprenant :
un boîtier (10) qui est pourvu d'une fente (1016) et d'un orifice de montage (1011) ;
un ensemble de connexion (11), installé dans l'orifice de montage (1011) du boîtier (10) et est adapté pour serrer une borne (13) du connecteur (1) sur une borne d'accouplement (21) d'un connecteur d'accouplement (2) ;
un capot de sécurité (100) qui est monté de manière coulissante sur le boîtier (10) et est capable d'être déplacé de manière coulissante entre une position initiale où l'ensemble de connexion (11) n'est pas recouvert par le capot de sécurité (100) et une position de sécurité où l'ensemble de connexion (11) est recouvert par le capot de sécurité (100) ; et
un interverrouillage haute tension (16) qui est installé de manière mobile dans la fente (1016) et est capable d'être déplacé entre une position connectée où l'interverrouillage haute tension (16) est électriquement en prise avec un interverrouillage haute tension d'accouplement (26) du connecteur d'accouplement (2) afin de mettre sous tension un circuit d'interverrouillage haute tension, et une position déconnectée où l'interverrouillage haute tension (16) est séparé de l'interverrouillage haute tension d'accouplement (26) afin de couper le circuit d'interverrouillage haute tension,
dans lequel, au cours du processus d'accouplement du connecteur (1) avec le connecteur d'accouplement (2), lorsque l'ensemble de connexion (11) n'est pas serré, l'ensemble de connexion (11) se trouve dans une position interférant avec le capot de sécurité (100) afin d'empêcher le capot de sécurité (100) de passer de la position initiale à la position de sécurité,
dans lequel le capot de sécurité (100) est connecté de manière coulissante à l'interverrouillage haute tension (16), de sorte que le capot de sécurité (100) et l'interverrouillage haute tension (16) sont associés physiquement selon la relation suivante :
lorsque le capot de sécurité (100) est déplacé vers le position initiale, l'interverrouillage haute tension (16) est déplacé vers la position déconnectée ; et
lorsque le capot de sécurité (100) est déplacé vers le position de sécurité, l'interverrouillage haute tension (16) est déplacé vers la position connectée,
dans lequel le capot de sécurité (100) est configuré pour être déplacé entre la position initiale et la position de sécurité dans une première direction, et l'interverrouillage haute tension (16) est configuré pour être déplacé entre la position connectée et la position déconnectée dans une seconde direction perpendiculaire à la première direction.

2. Connecteur (1) selon la revendication 1,
dans lequel l'interverrouillage haute tension (16) comprend :
un isolant (161) ; et
deux bornes de détection (163) qui sont fixées à l'isolant (161) et sont utilisées pour se connecter électriquement respectivement à des électrodes positive et négative du circuit d'interverrouillage haute tension,
dans lequel, lorsque l'interverrouillage haute tension (16) est déplacé vers la position connectée, les deux bornes de détection (163) de l'interverrouillage haute tension (16) sont connectées électriquement à une borne de détection d'accouplement (263) de l'interverrouillage haute tension d'accouplement (26) afin de mettre sous tension le circuit d'interverrouillage haute tension, dans lequel, lorsque l'interverrouillage haute tension (16) est déplacé vers la position déconnectée, les deux bornes de détection (163) sont séparées de la borne de détection d'accouplement (263) afin de couper le circuit d'interverrouillage haute tension.

3. Connecteur (1) selon la revendication 2,
dans lequel une fente de guidage (10b) s'étendant dans la première direction est formée sur l'une de la surface de paroi interne du capot de sécurité (100) et de la surface de paroi externe du boîtier (10), et une nervure de guidage (102a) s'étendant dans la première direction est formée sur l'autre ;
dans lequel la fente de guidage (10b) s'accouple de manière coulissante avec la nervure de guidage (102a) pour guider le capot de sécurité (100) afin qu'il se déplace entre la position initiale et la position de sécurité dans la première direction par rapport au boîtier (10) ; en particulier
dans lequel la fente (1016) sur le boîtier (10) s'étend dans la seconde direction, l'isolant (160) de l'interverrouillage haute tension (16) comprend une première partie (161) s'étendant dans la seconde direction, et
la première partie (161) de l'isolant (160) s'accouple de manière coulissante avec la fente (1016) du boîtier (10) afin de guider l'interverrouillage haute tension (16) pour qu'il se déplace entre la position connectée et la position déconnectée dans la seconde direction par rapport au boîtier (10).

4. Connecteur (1) selon la revendication 3,
dans lequel l'isolant (160) de l'interverrouillage haute tension (16) comprend en outre une seconde partie (162) qui est connectée à la première partie (161) et est située à l'extérieur du boîtier (10) ; et
dans lequel la borne de détection (163) est fixée à la première partie (161) de l'isolant (160), et la seconde partie (162) de l'isolant (160) est connectée de manière coulissante au capot de sécurité (100).

5. Connecteur (1) selon la revendication 4,
dans lequel une paire de parois de support (103) est formée sur la surface de paroi interne du capot de sécurité (100), et une partie de la seconde partie (162) de l'isolant (160) est disposée dans un espace entre la paire de parois de support (103),
une glissière (1620) est formée sur chaque côté de la seconde partie (162) de l'isolant (160) faisant face à la paroi de support (103), et une partie convexe (103a) est formée sur la paroi de support (103) et est connectée de manière coulissante à la glissière (1620), et
la glissière (1620) comprend une partie principale (1623) s'étendant sur une longueur prédéterminée dans une direction inclinée par rapport à la première direction afin de convertir le mouvement du capot de sécurité (100) dans la première direction en le mouvement de l'interverrouillage haute tension (16) dans la seconde direction, en particulier
dans lequel la glissière (1620) comporte également une première partie d'extrémité (1621) et une seconde partie d'extrémité (1622), qui sont connectées respectivement aux deux extrémités de la partie principale (1623) de la glissière (1620), et la première partie d'extrémité (1621) et la seconde partie d'extrémité (1622) s'étendent le long de la première direction ;
dans lequel, lorsque le capot de sécurité (100) est déplacé vers la position initiale, la partie convexe (103a) est déplacée dans la première partie d'extrémité (1621) de la glissière (1620) ;
dans lequel, lorsque le capot de sécurité (100) est déplacé vers la position de sécurité, la partie convexe (103a) est déplacée dans la seconde partie d'extrémité (1622) de la glissière (1620).

6. Connecteur (1) selon la revendication 3,
dans lequel l'interverrouillage haute tension (16) comporte également une bague d'étanchéité (164) qui est emmanchée sur la première partie (161) de l'isolant (160) et utilisée pour assurer l'étanchéité d'un espace entre la première partie (161) de l'isolant (160) et la fente (1016) du boîtier (10).

7. Connecteur (1) selon l'une quelconque des revendications 1 à 6,
dans lequel l'ensemble de connexion (11) a une première partie opérationnelle (111) exposée depuis le boîtier (10), de sorte que l'ensemble de connexion (11) est capable d'être serré ou desserré par actionnement de la première partie opérationnelle (111) ; dans lequel, au cours du processus d'accouplement du connecteur (1) avec le connecteur d'accouplement (2), lorsque l'ensemble de connexion (11) n'est pas serré, la première partie opérationnelle (111) se trouve dans une position interférant avec le capot de sécurité (100) afin d'empêcher le capot de sécurité (100) de passer de la position initiale à la position de sécurité ;
dans lequel, lorsque le capot de sécurité (100) est dans la position initiale, la première partie opérationnelle (111) n'est pas recouverte par le capot de sécurité (100) afin de permettre le serrage ou le desserrage de l'ensemble de connexion (11) par actionnement de la première partie opérationnelle (111) ;
dans lequel, lorsque le capot de sécurité (100) est dans la position de sécurité, la première partie opérationnelle (111) est recouverte par le capot de sécurité (100) afin d'empêcher le desserrage de l'ensemble de connexion (11) par actionnement de la première partie opérationnelle (111).

8. Connecteur (1) selon la revendication 7,
dans lequel, au cours du processus d'accouplement du connecteur (1) avec le connecteur d'accouplement (2), lorsque l'ensemble de connexion (11) a été serré, la première partie opérationnelle (111) se trouve dans une position qui n'interfère pas avec le capot de sécurité (100), pour permettre au capot de sécurité (100) d'être déplacé de la position initiale à la position de sécurité.

9. Connecteur (1) selon la revendication 7, comprenant en outre :
un organe de connexion mécanique (12), qui est installé sur le boîtier (10) et adapté à une connexion filetée avec un boîtier d'accouplement (20) du connecteur d'accouplement (2) afin de serré le boîtier (10) sur le boîtier d'accouplement (20),
dans lequel l'organe de connexion mécanique (12) a une seconde partie opérationnelle (121) exposée depuis le boîtier (10), de sorte que l'organe de connexion mécanique (12) est capable d'être serré ou desserré par actionnement de la seconde partie opérationnelle (121) ;
dans lequel, au cours du processus d'accouplement du connecteur (1) avec le connecteur d'accouplement (2), lorsque l'organe de connexion mécanique (12) n'est pas serré, la seconde partie opérationnelle (121) se trouve dans une position d'interférence avec le capot de sécurité (100) afin d'empêcher le capot de sécurité (100) d'être déplacé de la position initiale à la position de sécurité ;
dans lequel, lorsque le capot de sécurité (100) est dans la position initiale, la seconde partie opérationnelle (121) n'est pas recouverte par le capot de sécurité (100) afin de permettre le serrage ou le desserrage de l'organe de connexion mécanique (12) par actionnement de la seconde partie opérationnelle (121) ;
dans lequel, lorsque le capot de sécurité (100) est dans la position de sécurité, la seconde partie opérationnelle (121) est recouverte par le capot de sécurité (100) afin d'empêcher le desserrage de l'organe de connexion mécanique (12) par actionnement de la seconde partie opérationnelle (121) ; en particulier
dans lequel, au cours du processus d'accouplement du connecteur (1) avec le connecteur d'accouplement (2), lorsque l'ensemble de connexion (11) et l'organe de connexion mécanique (12) sont serrés, la première partie opérationnelle (111) et la seconde partie opérationnelle (121) se trouvent dans une position qui n'interfère pas avec le capot de sécurité (100), afin de permettre au capot de sécurité (100) d'être déplacé de la position initiale à la position de sécurité.

10. Connecteur (1) selon la revendication 9,
dans lequel le capot de sécurité (100) comprend :
une paroi supérieure (101) qui est pourvue d'un trou opérationnel (101a) ; et
une paire de parois latérales (102) qui sont connectées respectivement aux deux côtés de la paroi supérieure (101),
dans lequel, lorsque le capot de sécurité (100) est dans la position initiale, la première partie opérationnelle (111) est située à l'extérieur du capot de sécurité (100), et la seconde partie opérationnelle (121) est exposée depuis le capot de sécurité (100) à travers le trou opérationnel (101a), en particulier
dans lequel une partie de limitation (101b) est formée sur la surface de paroi interne de la paroi supérieure (101) du capot de sécurité (100), et
lorsque le capot de sécurité (100) est déplacé de la position initiale à la position de sécurité, la partie de limitation (101b) vient en appui contre la première partie opérationnelle (111) afin de limiter le capot de sécurité (100) au niveau de la position de sécurité.

11. Connecteur (1) selon l'une quelconque des revendications 1 à 10, comprenant en outre :
une borne (13) qui est disposée dans le boîtier (10) pour une connexion électrique avec la borne d'accouplement (21) du connecteur d'accouplement (2).

12. Connecteur (1) selon l'une quelconque des revendications 1 à 6, comprenant en outre :
un câble (14) dont une extrémité est insérée dans le boîtier (10) dans la première direction et est connectée électriquement à la borne (13) ; et
un capot d'extrémité (15) qui est emmanché sur une extrémité du boîtier (10) et utilisé pour fixer le câble (14) au boîtier (10).

13. Connecteur (1) selon la revendication 12,
dans lequel un orifice de câble (1014) permettant l'insertion du câble (14) dans la première direction est formé à une extrémité du boîtier (10) ;
dans lequel l'orifice de montage (1011) est formé sur le dessus de l'autre extrémité du boîtier (10) afin de permettre l'insertion de l'ensemble de connexion (11) dans la seconde direction perpendiculaire à la première direction ;
dans lequel un orifice d'accouplement est formé sur le dessous de l'autre extrémité du boîtier (10) afin de permettre l'accouplement du connecteur (1) avec le connecteur d'accouplement (2) dans la seconde direction.

14. Connecteur (1) selon l'une quelconque des revendications 1 à 6,
dans lequel un porte-à-faux élastique (102b) est formé sur le capot de sécurité (100), et une saillie de limitation (10d) est formée sur le boîtier (10) ;
dans lequel, lorsque le boîtier (10) n'est pas accouplé au boîtier d'accouplement (20) et le capot de sécurité (100) est dans la position initiale, le porte-à-faux élastique (102b) est dans une position d'interférence avec la saillie de limitation (10d) afin d'empêcher le capot de sécurité (100) de passer de la position initiale à la position de sécurité, en particulier
dans lequel, lorsque le boîtier (10) a été accouplé au boîtier d'accouplement (20) et le capot de sécurité (100) est dans la position initiale, le porte-à-faux élastique (102b) est poussé par une partie de déverrouillage (20d) du boîtier d'accouplement (20) vers une position qui n'interfère pas avec la saillie de limitation (10d), de sorte que le déplacement du capot de sécurité (100) ne va pas être entravé par la saillie de limitation (10d).

15. Ensemble de connecteurs, comprenant :
le connecteur (1) selon l'une quelconque des revendications 1 à 14 ; et
un connecteur d'accouplement (2) adapté pour s'accoupler avec le connecteur (1),
dans lequel le connecteur d'accouplement (2) comprend :
un boîtier d'accouplement (20) qui est adapté pour s'accoupler avec le boîtier (10) du connecteur (1) ;
une borne d'accouplement (21) qui est disposée dans le boîtier d'accouplement (20) pour une connexion électrique avec la borne (13) du connecteur (1) ; et
un interverrouillage haute tension d'accouplement (26) qui est disposé dans le boîtier d'accouplement (20) pour s'accoupler avec l'interverrouillage haute tension (16) du connecteur (1).
